# EUROPEAN PATENT APPLICATION

(11) **EP 3 907 778 A1**
(43) Date of publication of application: **10.11.2021**
(21) Application number: 19909561.3
(22) Date of filing: 21.06.2019
(51) Int. Cl.: H01M 2/10

(54) **BATTERY PACK, VEHICLE, AND ENERGY STORAGE DEVICE**

(30) Priority: 09.01.2019 CN 201910021244; 09.01.2019 CN 201910020967; 09.01.2019 CN 201910021246; 09.01.2019 CN 201910021248; 09.01.2019 CN 201910021247; 09.01.2019 CN 201910020925
(71) Applicant: BYD Company Limited, Guangdong 518118 (CN)
(72) Inventor: HE, Long, Shenzhen, Guangdong 518118 (CN); SUN, Huajun, Shenzhen, Guangdong 518118 (CN); JIANG, Wenfeng, Shenzhen, Guangdong 518118 (CN); LU, Zhipei, Shenzhen, Guangdong 518118 (CN); ZHENG, Weixin, Shenzhen, Guangdong 518118 (CN); TANG, Jianglong, Shenzhen, Guangdong 518118 (CN); ZHU, Yan, Shenzhen, Guangdong 518118 (CN); WANG, Xinyue, Shenzhen, Guangdong 518118 (CN); HE, Kefeng, Shenzhen, Guangdong 518118 (CN)
(74) Representative: Hoffmann Eitle
(86) International application number: PCT/CN2019/092389
(87) International publication number: WO 2020/143173

(57) **Abstract**

A battery pack, a vehicle, and an energy storage device are provided. The battery pack includes a cell array and a support member, where the cell array includes a plurality of cells, each of the plurality of cells has a first size, and the first size is a maximum value of spacings between pairs of imaginary parallel planes that clamp the cell; at least one cell satisfies 600 mm≤first size≤2500 mm, and is supported by the support member; and a normal direction of two parallel planes corresponding to the first size is a direction Q, a battery placement area is defined in the battery pack, the cell array is located in the battery placement area, and each of the plurality of cells extends from one side of the battery placement area to another side of the battery placement area along the direction Q.

## Description

### CROSS-REFERENCE TO RELATED APPLICATIONS

This application claims priority to Chinese Patent Application Serial Nos. "201910021244.0", "201910020967.9", "201910021246.X", "201910021248.9", "201910021247.4", and "201910020925.5", filed by BYD Company Limited on January 9, 2019, which is incorporated by reference in this application in its entirety.

### FIELD

This application relates to the technical field of vehicle manufacturing, and specifically, to a battery pack, a vehicle having the battery pack, and an energy storage device having the battery pack.

### BACKGROUND

In the related art, a battery pack, such as that applied to an electric vehicle, mainly includes a pack body and a plurality of battery modules mounted in the pack body. Each battery module is an assembly of a plurality of cells.

As users have increasingly high requirements on the battery life of electric vehicles, the use of a conventional power battery pack in the limited space at the bottom of the vehicle body leads to low space utilization. In addition, energy density of the power battery pack cannot meet the demand, which has gradually become an important factor hindering the development of electric vehicles.

### SUMMARY

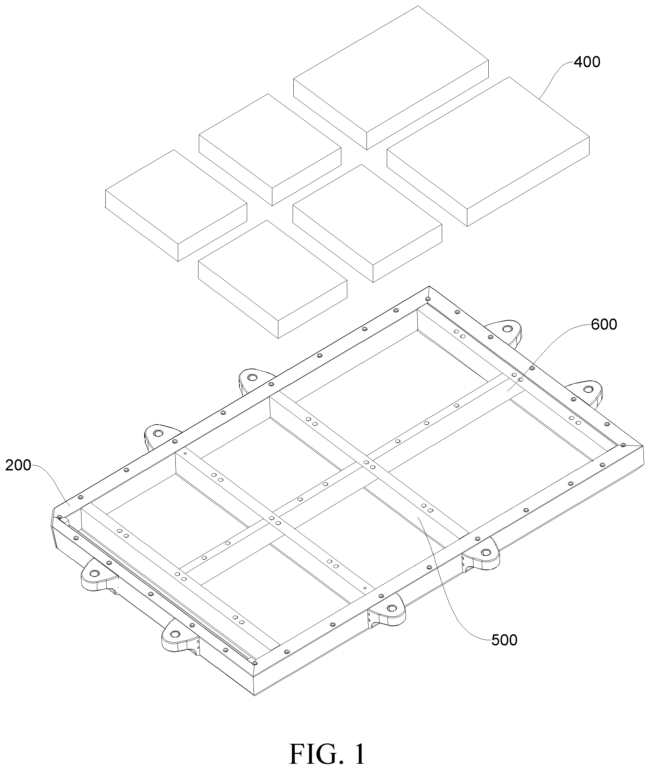

In the existing related art, as shown in FIG. 1, a battery pack includes a battery pack housing, where a plurality of cross beams 500 and a plurality of longitudinal beams 600 divide the battery pack housing into a plurality of mounting regions for a battery module 400, and the battery module 400 is fixed to the cross beams 500 or longitudinal beams 600 through screws or in another manner. The battery module 400 includes a plurality of cells arranged in sequence, where the plurality of cells are arranged to form a cell array, and an end plate and/or side plate are or is disposed outside the cell array. Generally, the end plate and the side plate are both included, and the end plate and the side plate are fixed to enclose a space for accommodating the cell array. In addition, the end plate and the side plate are connected through a screw connection or welding, or by another connector such as a pull rod, to fix the cell array.

The battery module 400 is fixed to the cross beams 500 or longitudinal beams 600 through screws and other structures, which wastes space, increases a weight because of addition of screws and other connectors, and reduces energy density. In addition, the battery module 400 is designed through fitting of the end plate and the side plate. The end plate and the side plate both have specific thicknesses and specific heights, resulting in waste of internal space of the battery pack and reduction of the volume utilization of the battery pack. Generally, for the battery pack in the foregoing related art, a ratio of a sum of volumes of cells in the battery pack to a volume of the battery pack is about 50% or even as low as 40%.

By using the battery pack provided by the embodiments in the foregoing related art, the end plate and the side plate of the battery module 400 and connection and mounting manners and the like inside the battery pack all reduce a utilization of internal space of the battery pack. Consequently, in the battery pack, a ratio of the sum of volumes of the cells to the volume of the pack body is excessively low, and energy density of the battery pack cannot satisfy an increase in the foregoing demand and gradually becomes an important factor hindering the development of electrical vehicles. In addition, there is a cumbersome assembly process and complex assembly procedures. A battery module needs to be assembled first, and then, the battery module is mounted into the battery pack, resulting in increases in labor costs, material resource costs, and the like. In addition, because a plurality of assembly procedures are needed, a probability of a defective rate is increased during assembly of the battery pack. The plurality of assembly procedures increase a possibility that the battery pack becomes loose and is not mounted firmly, resulting in adverse impact on quality of the battery pack and degradation of stability and reliability of the battery pack.

This application aims to resolve at least one of the technical problems existing in the related art. Therefore, an objective of the present disclosure is to provide a battery pack, where the battery pack has advantages such as the high space utilization, the high energy density, the excellent battery life, the high reliability, the low costs, and the high quality.

To achieve the foregoing objective, this application provides a battery pack, including a cell array and a support member, where the cell array includes a plurality of cells, each of the plurality of cells has a first size, and the first size is a maximum value of spacings between pairs of imaginary parallel planes that clamp the cell; at least one cell satisfies 600 mm≤first size≤2500 mm, and is supported by the support member; and a normal direction of two parallel planes corresponding to the first size is a direction Q, a battery placement area is defined in the battery pack, the cell array is located in the battery placement area, and each of the plurality of cells extends from one side of the battery placement area to another side of the battery placement area along the direction Q.

This application provides a battery pack, including a cell array and a support member, where the cell array includes a plurality of cells, each of the plurality of cells has a size A, the size A is a length of a smallest rectangle enclosing the cell, and at least one cell satisfies 600 mm≤size A≤2500 mm, and is supported by the support member.

This application provides a battery pack, including a cell array and a support member, where the cell array includes a plurality of cells, and at least one cell satisfies that: a battery body and electrode terminals extending from the battery body and configured to lead out an external current from the battery body are included, the battery body is a rough cuboid, a length of the battery body is L, and 600 mm≤L≤2500 mm, and the at least one cell is supported by the support member; and a battery placement area is defined in the battery pack, the cell array is located in the battery placement area, and the at least one cell extends from one side of the battery placement area to another side of the battery placement area along a length direction of the smallest rectangle enclosing the cell.

According to the foregoing technical solutions, more cells can may arranged inside the battery pack by defining an arrangement manner of the cells in the battery pack and a size of the cell. The cell is a pouch battery and can be supported by the support member. The pouch battery may swell and crack without exploding, thereby improving safety performance of the cell. Because of omission of a module framework, the cells being directly placed inside the battery pack housing, on the one hand, facilitates the cells of dissipating heat through the battery pack housing or another heat dissipation component, and on the other hand, enables more cells to be disposed inside effective space. In addition, a cell core of the pouch battery has a large proportion, so that the volume utilization is greatly improved. In addition, a manufacturing process of the battery pack is simplified, complexity of assembly of the cells is reduced, and production costs are lowered, so that a weight of the battery pack and a weight of the whole battery pack are reduced, thereby achieving a light weight of the battery pack. In particular, when the battery pack is mounted on an electric vehicle, the battery life of the electric vehicle may further be improved, and a light weight of the electric vehicle is achieved, thereby improving the capacity, the voltage, and the battery life of the entire battery pack. For example, in an electric vehicle, the design may increase the space utilization from the original space utilization of about 40% to more than 60% or even higher, for example, 80%.

This application further provides a vehicle including the foregoing battery pack.

This application further provides an energy storage device including the foregoing battery pack.

Compared to the related art, the vehicle and the energy storage device have same advantages as the foregoing battery pack, and details are not described herein again.

Other aspects and advantages of this application will be given in the following description, some of which will become apparent from the following description or may be learned from practices of this application.

### BRIEF DESCRIPTION OF THE DRAWINGS

The foregoing and/or additional aspects and advantages of this application will become apparent and comprehensible in the description made with reference to the following accompanying drawings, where:
FIG. 1 is a schematic exploded view of a battery pack according to the related art;
FIG. 2 is a schematic three-dimensional structural diagram of a battery pack according to an implementation of this application;
FIG. 3 is a schematic three-dimensional structural diagram of a cell according to an implementation of this application;
FIG. 4 is a schematic arrangement diagram of a plurality of cells in a battery pack housing according to an implementation of this application;
FIG. 5 is a schematic three-dimensional structural diagram of a battery pack according to an implementation of this application;
FIG. 6 is a schematic three-dimensional structural diagram of a battery pack according to another implementation of this application;
FIG. 7 is a schematic three-dimensional structural diagram of a battery pack according to still another implementation of this application;
FIG. 8 is an enlarged view of a portion A in FIG. 7;
FIG. 9 is a cross-sectional three-dimensional view of a battery pack according to an implementation of this application;
FIG. 10 is an enlarged view of a portion B in FIG. 9;
FIG. 11 is a cross-sectional view of a battery pack according to another implementation of this application, where a first edge beam and a second edge beam are not shown;
FIG. 12 is an exploded view of a battery pack according to an implementation of this application;
FIG. 13 is a schematic three-dimensional structural diagram of a first side plate or a second side plate according to an implementation of this application;
FIG. 14 is a schematic three-dimensional structural diagram of a first end plate or a second end plate according to an implementation of this application;
FIG. 15 is a schematic three-dimensional structural diagram of a battery pack according to an implementation of this application, where a plurality of battery modules are provided;
FIG. 16 is a schematic three-dimensional structural diagram of a battery pack (cavity) being formed on an electric vehicle according to an implementation of this application;
FIG. 17 is a cross-sectional view of a cavity according to an implementation of this application;
FIG. 18 is a schematic three-dimensional diagram of a vehicle-use tray being fixed on an electric vehicle according to an implementation of this application;
FIG. 19 is an exploded view of a battery pack (vehicle-use tray) being fixed on an electric vehicle according to an implementation of this application;
FIG. 20 is a three-dimensional diagram of a battery pack according to an implementation of this application;
FIG. 21 is a three-dimensional diagram of a battery pack according to another implementation of this application;
FIG. 22 is a three-dimensional diagram of a battery pack according to still another implementation of this application;
FIG. 23 is a three-dimensional diagram of a battery pack according to yet another implementation of this application;
FIG. 24 is a three-dimensional diagram of a battery pack according to yet another implementation of this application;
FIG. 25 is a three-dimensional diagram of a bottom beam according to an implementation of this application;
FIG. 26 is a schematic structural diagram of a vehicle according to an implementation of this application;
FIG. 27 is a schematic structural view of an energy storage device according to an implementation of this application;
FIG. 28 is a measurement principle diagram of a first size and a second size according to this application;
FIG. 29 is a three-dimensional diagram of a battery pack according to yet another implementation of this application;
FIG. 30 is a schematic structural diagram of a cell according to yet another implementation of this application;
FIG. 31 is a three-dimensional diagram of a battery pack according to yet another implementation of this application;
FIG. 32 is a schematic structural diagram of a cell according to yet another implementation of this application.

**Reference numerals**

| | | | |
|---|---|---|---|
| 1 | Vehicle | 2 | Energy storage device |
| 3 | Cell array | 4 | Support member |
| 100 | Cell | 101 | First electrode terminal |
| 102 | Second electrode terminal | 103 | Anti-explosion valve |
| 104 | Reinforcing shell | 105 | Pouch cell |
| 200 | Battery pack | 201 | First edge beam |
| 202 | Second edge beam | 203 | Third edge beam |
| 204 | Fourth edge beam | 205 | First elastic buffer device |
| 206 | Second elastic device | 207 | First end plate |
| 208 | Second end plate | 209 | First side plate |
| 210 | Second side plate | 211 | Second panel |
| 212 | First panel | 213 | First support plate |
| 214 | Second support plate | 215 | First connection surface |
| 216 | Second connection surface | 217 | Heat preservation layer |
| 218 | Heat conducting plate | 219 | Heat exchange plate |
| 221 | Air intake | 222 | Exhaust passage |
| 235 | Fourth connection surface | 236 | Third connection surface |
| 233 | Second connection plate | 234 | Side plate body |
| 232 | First connection plate | 231 | End plate body |
| 700 | First separator | 800 | Second separator |
| 300 | Cavity | 301 | First side wall |
| 302 | Second side wall | 305 | Bottom of cavity |
| 400 | Battery module | 500 | Cross beam |
| 501 | First beam | 502 | Second beam |
| 600 | Longitudinal beam | | |
| L | Size of cell along direction Y | | |
| D | Size of cell along direction X | | |
| H | Size of cell along direction Z | | |
| L1 | Distance between first end and second end of cell | | |
| L2 | Distance between inner surface of first edge beam and inner surface of second edge beam/Distance between first side wall and second side wall along first direction | | |
| L3 | Width of battery pack in direction Y | | |

### DETAILED DESCRIPTION

Embodiments of this application are described in detail below, and examples of the embodiments are shown in accompanying drawings, where the same or similar elements or the elements having same or similar functions are denoted by the same or similar reference numerals throughout the description. The embodiments described below with reference to the accompanying drawings are exemplary and used only for explaining this application, and should not be construed as a limitation on this application.

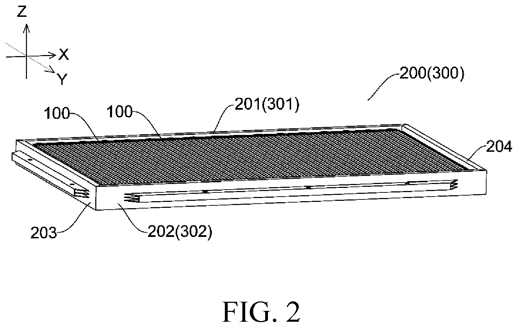

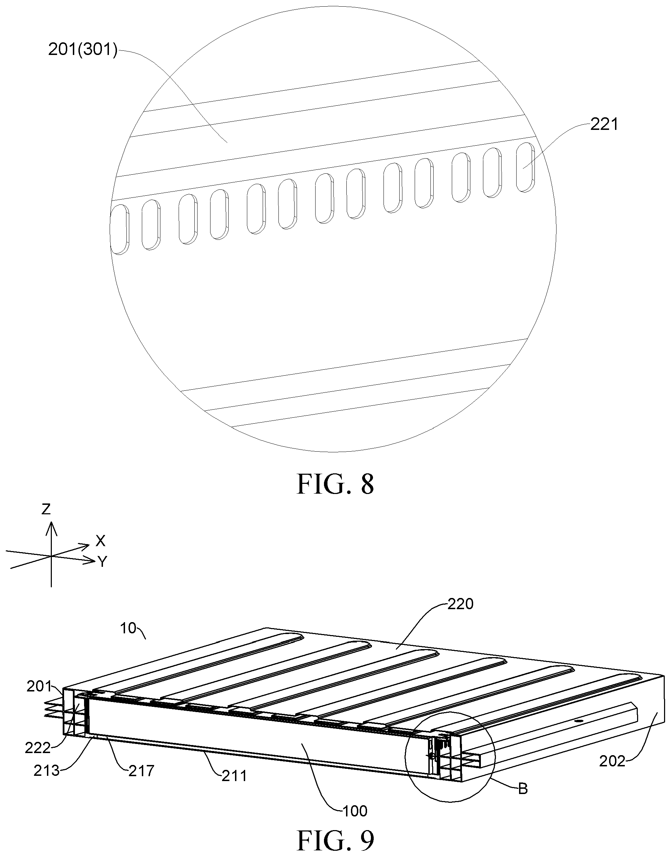

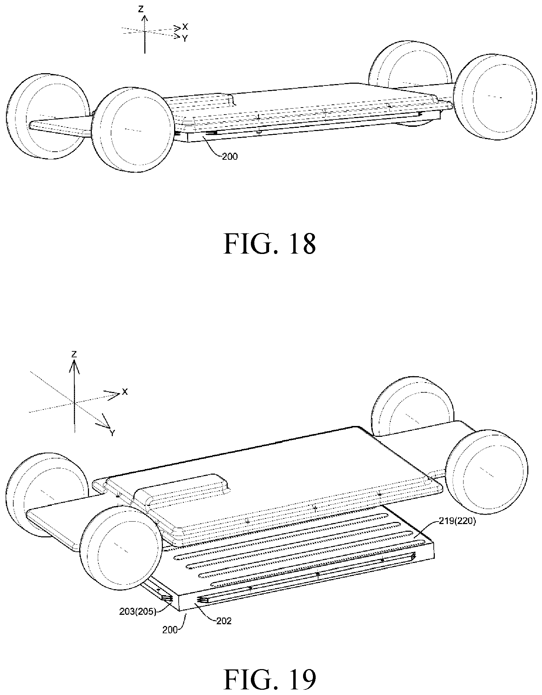

As shown in FIG. 2 to FIG. 32, according to an aspect of this application, a battery pack 200 is provided, including a cell array 3 and a support member 4.

The cell array 3 includes a plurality of cells 100, each of the plurality of cells 100 has a first size, and the first size is a maximum value of spacings between pairs of imaginary parallel planes that clamp the cell 100. At least one cell 100 satisfies 600 mm≤first size≤2500 mm.

It should be noted that for a specific cell 100, there are many groups of parallel planes, each group of parallel planes includes two parallel planes, the two parallel planes of each group can imaginarily clamp the cell 100, and there are distances between all pairs of parallel planes. The first size is a maximum value of the distances.

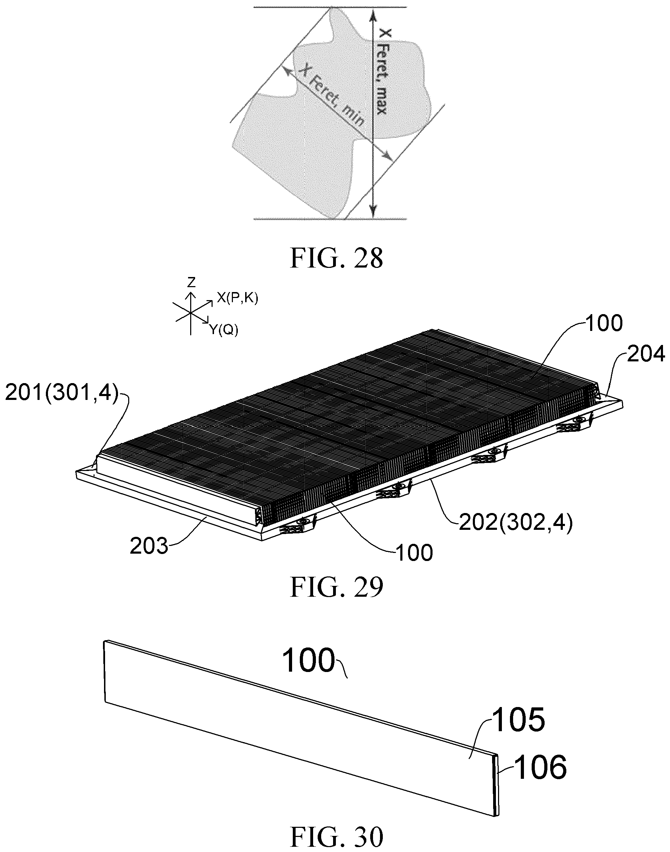

As shown in FIG. 28, for a definition of the first size, reference may be made to a Feret diameter. The Feret diameter is a measured size of an object along a specific direction. Generally, the measured size is defined as a distance between two parallel planes. The two parallel planes need to clamp an object and be perpendicular to a specified direction.

The cell 100 may be in various shapes, and may be in a regular geometric shape, for example, a square, a circle, a polygon, or a triangle, or may be in an irregular geometric shape. It may be understood that a shape of the cell is not limited in this application.

When the cell 100 is a specially shaped battery, the first size may be understood as follows: There are a plurality of groups of two parallel planes tangent to contour edges of the cell 100, and if a spacing between two parallel planes of one group is greater than a spacing between two parallel planes of any one of other groups, the maximum spacing may be defined as the first size.

A support region is provided on an outer surface of the cell 100, and the support region may be disposed on two ends of the cell 100 along a direction of the first size, so that the cell 100 can be supported by the support member 4 along the direction of the first size.

It is found by the inventor of this application that the first size of the cell 100 may be designed to range from 600 mm to 2500 mm. Because the cell 100 is long enough, the cell 100 can be directly supported by the support member 4, so that less cross beams 500 and/or longitudinal beams 600 are used in the battery pack 200, and even the cross beam 500 and/or the longitudinal beam 600 can be omitted in the battery pack 200, thereby reducing space occupied by the cross beam 500 and/or the longitudinal beam 600 in the battery pack 200, improving the space utilization of the battery pack 200, enabling as many cells 100 as possible to be arranged inside the battery pack 200, and further improving at least one of the capacity, the voltage, and the battery life of the entire battery pack. For example, in an electric vehicle, the design may increase the space utilization from the original space utilization of about 40% to more than 60% or even higher, for example, 80%.

By the support member 4 is coupled to the support region, it means that the support member 4 can be in direct contact with the support region to support the cell, or the support member 4 can also be in indirect contact with or connected to the support region by another component, which may be set according to a usage scenario, and is not limited in this application.

The foregoing cell 100 is a pouch battery. When a safety hazard occurs, the pouch battery may swell and crack without exploding, thereby improving safety performance of the cell 100. In addition, a cell core of the pouch battery has a large proportion to improve the volume utilization, and the pouch battery has low processing costs. For example, in an electric vehicle, the design may increase the space utilization from the original space utilization of about 40% to more than 60% or even higher, for example, 80%.

In some embodiments, as shown in FIG. 29 to FIG. 32, at least one cell 100 includes a casing, a cell core located inside the casing, and a reinforcing member configured to reinforce the casing, and the support member 4 is coupled to the reinforcing member to support the cell 100. The support region may be provided on an outer surface of the reinforcing member. A pouch cell 105 includes a casing and a cell core located inside the casing. In this way, an aluminum plastic film of the pouch cell 105 can be prevented from being worn out due to a dislocation of the pouch cell 105, and the rigidity of the cell 100 is relatively large, which can enhance the rigidity of the battery pack 200.

The reinforcing member includes a reinforcing shell 104, the reinforcing shell 104 envelops a casing of at least one cell 100, and the support member 4 is coupled to the reinforcing shell 104 to support the cell 100. The reinforcing shell 104 can completely envelop the pouch cell 105 or envelop a region corresponding to the support member 4 of the pouch cell 105, the reinforcing shell 104 is a rigid shell, the reinforcing shell 104 may be a steel shell or may be made of a composite material. When the reinforcing shell 104 is made of a metal material, a metal casing of the cell 100 has a better heat conducting property, thereby improving heat dissipation efficiency of the cell 100 and optimizing a heat dissipation effect.

The reinforcing shell 104 may be partially bored, to reduce a weight.

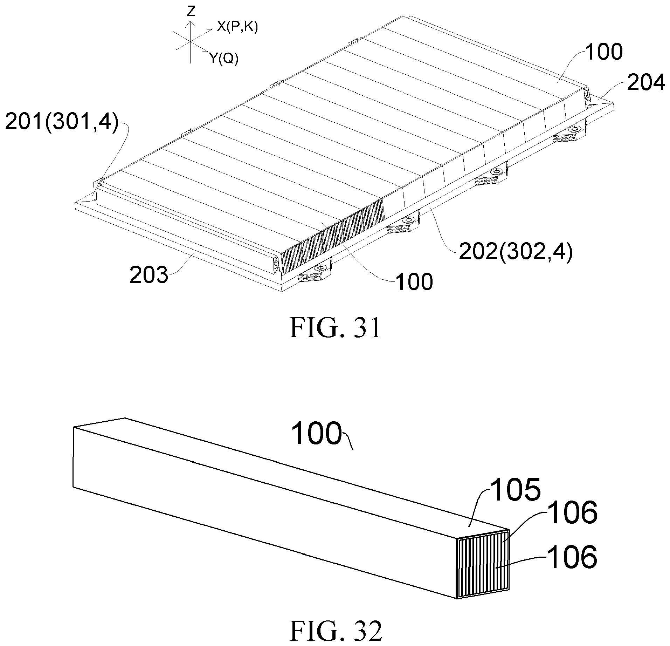

In the embodiments shown in FIG. 29 and FIG. 30, each reinforcing shell 104 envelops one pouch cell 105. In the embodiments shown in FIG. 31 and FIG. 32, each reinforcing shell 104 envelops a plurality of pouch cells 105.

In some embodiments, the cell 100 includes electrode terminals configured to lead out an internal current, the reinforcing member includes a current converging member, the current converging member is configured to electrically connect electrode terminals of the plurality of cells 100, and the support member 4 is coupled to the current converging member to support the cells 100. In this way, the plurality of cells 100 are arranged on the support member 4, and the plurality of cells 100 are also electrically connected.

In addition, because there is no need to arrange the cross beam and/or the longitudinal beams in the battery pack 200, on the one hand, a manufacturing process of the battery pack 200 is simplified, assembly complexity of the cell 100 is reduced, and production costs are reduced, and on the other hand, a weight of the battery pack 200 is reduced, thereby achieving a light weight of the battery pack. In particular, when the battery pack is mounted on an electric vehicle, the battery life of the electric vehicle may further be improved, and a light weight of the electric vehicle is achieved.

600 mm≤first size ≤1500 mm, and preferably, 600 mm≤first size ≤1000 mm. The cell 100 of such a length is long enough to be supported by the supported by the support member 4, and the cell 100 of such a length is not excessively long. When applied to the battery pack 200, the cell 100 has the rigidity that is large enough.

In this application, a specific form of the battery pack is not particularly limited. It is only necessary to limit that the battery pack includes the support member 4, the cell array 3 is located on the support member 4, and the cells 100 are supported by the support member 4. A specific structure of the support member 4 is not limited in this application provided that the cells 100 can be supported by the support member 4. For a specific structure of the support member 4, refer to the descriptions below. The cells 100 are supported by the support member 4. The cells 100 may be directly supported by the support member 4, that is, separately placed on the support member 4, or may be fixed on the support member 4. A specific fixing manner is described in detail below. Particular supporting and fixing manners are not limited in this application.

The foregoing support member 4 is configured to support the cell array 3. The support member 4 is generally a rigid structure. The support member 4 can be an independently machined tray or a rigid support structure formed on a chassis of a vehicle, and can be easily mounted on a complete vehicle or another device.

In some embodiments, the cell 100 has a second size, the second size is a minimum value of spacings between pairs of imaginary parallel planes that clamp the cell, a normal direction of two parallel planes corresponding to the second size is a direction P, and the plurality of cells are arranged along the direction P of at least one cell.

It should be noted that for a specific cell 100, there are many groups of parallel planes, each group of parallel planes includes two parallel planes, the two parallel planes of each group can imaginarily clamp the cell 100, and there are distances between all pairs of parallel planes. The second size is a minimum value of the distances.

As shown in FIG. 28, for a definition of the second size, reference may be made to a Feret diameter. The Feret diameter is a measured size of an object along a specific direction. Generally, the measured size is defined as a distance between two parallel planes. The two parallel planes need to clamp an object and be perpendicular to a specified direction.

When the cell 100 is a specially shaped battery, the second size may be understood as follows: There are a plurality of groups of two parallel planes tangent to contour edges of the cell 100, and if a spacing between two parallel planes of one group is less than a spacing between two parallel planes of any one of other groups, the minimum spacing may be defined as the second size.

The normal direction of two parallel planes corresponding to the second size is the direction P, and the plurality of cells are arranged along the direction P of any cell in the cell array 3.

At least one cell satisfies that 23≤first size/second size≤208, and in some embodiments, 50≤first size/second size≤70. It is found by the inventor through a large quantity of experiments that for a cell 100 that satisfies the foregoing size requirements, the thickness of the cell 100 in a direction of the second size can be reduced on the basis that the rigidity satisfies the support requirements, so that the cell 100 has a higher heat dissipation capacity.

In some embodiments, a volume of the cell 100 is V, and a battery body of at least one cell 100 satisfies that 0.0005 mm^{―2}≤first size/V≤0.002 mm^{―2}. The volume V of the cell can be obtained by using a water displacement method: The cell is placed into a container full of water, and a volume of water overflowing from the container is equal to the volume of the cell. It is found by the inventor through a large quantity of experiments that the cell 100 has a small cross section, and the cell 100 has a good heat dissipation effect when the cell 100 satisfies the foregoing limitations, so that a difference between temperatures of an interior and a periphery of the cell 100 is small.

In another implementation provided in this application, a ratio of a surface area S of a cell body of the cell 100 to the volume V satisfies that 0.1 mm^{―1}≤S/V≤0.35 mm^{―1}. The ratio may be achieved through the foregoing longer and thinner cell 100 or through size adjustment. By controlling the ratio of the surface area S to the volume V of the cell 100, it may be ensured that while the length of the cell 100 extends along the direction Y, the cell 100 has a sufficient heat dissipation area, to ensure the heat dissipation effect of the cell 100.

It should be noted that the surface area of the cell refers to a sum of areas of all surfaces of the cell.

In an implementation of this application, at least one cell 100 includes a first end and a second end along a first size direction, at least one of the first end and the second end includes electrode terminals configured to lead out an internal current of the cell 100, and the electrode terminals of the cells 100 are electrically connected to each other by a connector.

The "first end" and "second end" of the cell 100 are used for describing an orientation of the cell 100, but are not used for limiting and describing a specific structure of the cell 100. For example, the first end and the second end are not used for limiting and describing a positive electrode and a negative electrode of the cell 100. In an implementation, for the cell 100, as shown in FIG. 2 to FIG. 4, a first electrode terminal 101 of the cell 100 is led out by the first end of the cell 100, and a second electrode terminal 102 of the cell 100 is led out by the second end of the cell 100. In other words, the first size direction of the cell 100 may be a current direction inside the cell 100, that is, the current direction inside the cell 100 is the first size direction. In this way, because the current direction is the same as the first size direction of the cell 100, the cell 100 has a larger effective heat dissipation area and higher heat dissipation efficiency. The first electrode terminal 101 may be the positive electrode of the cell 100, and the second electrode terminal 102 is the negative electrode of the cell 100. Alternatively, the first electrode terminal 101 is the negative electrode of the cell 100, and the second electrode terminal 102 is the positive electrode of the cell 100. The electrode terminals of the cells 100 are connected in series and parallel by a connector.

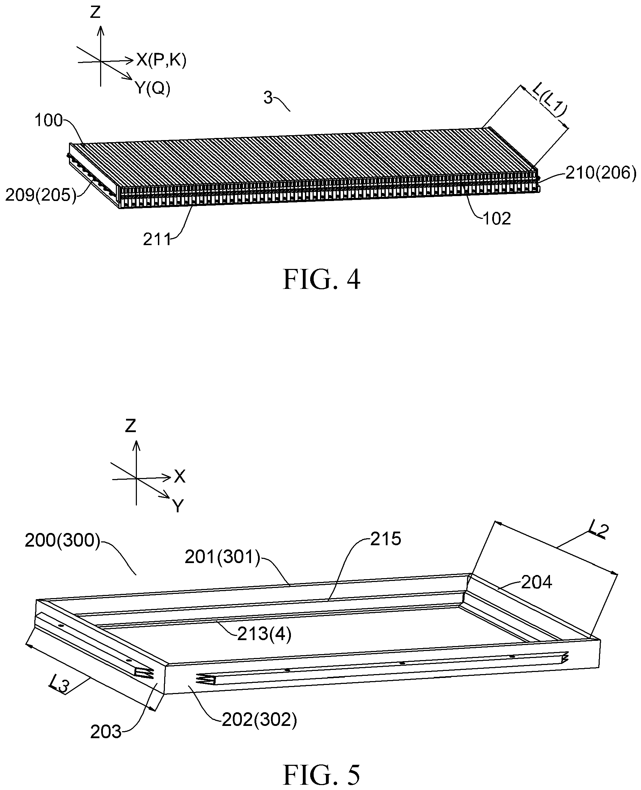

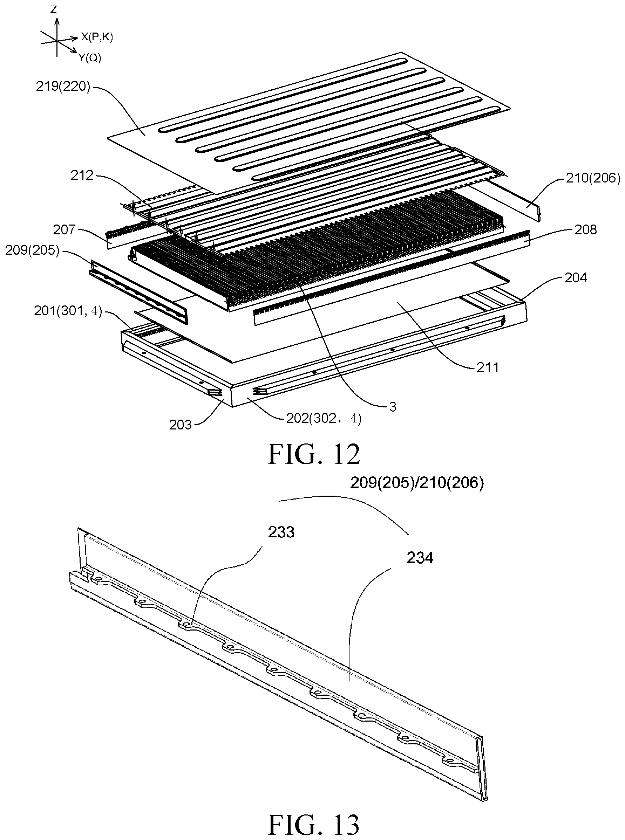

The battery pack further includes two side plate parts disposed opposite to each other on two sides of the cell array 3 and configured to clamp the cell array 3. The side plate parts clamp the cell array 3, and have a function of limiting the plurality of cells 100 from swelling and deforming, thereby ensuring starting of an anti-explosion valve 103 and/or a current interrupt device (CID). Specifically, in some embodiments, as shown in FIG. 4, the side plate parts may be a third edge beam 203 and a fourth edge beam 204. In some other embodiments, as shown in FIG. 12, the side plate parts may be a first side plate 209 and a second side plate 210.

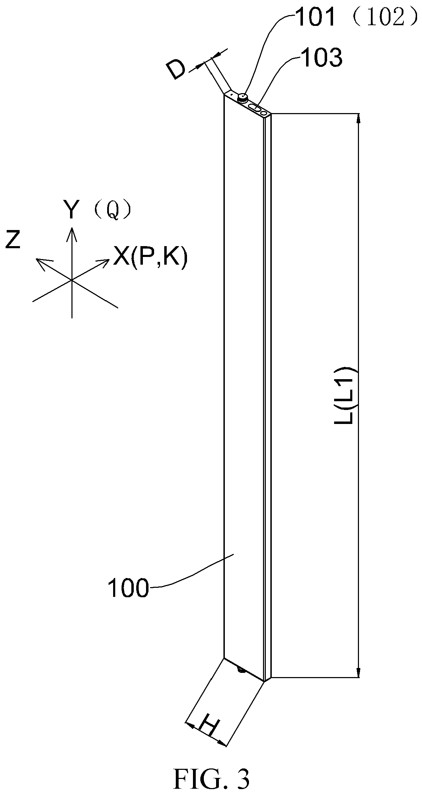

In some embodiments, as shown in FIG. 3 and FIG. 20 to FIG. 24, the normal direction of two parallel planes corresponding to the first size is the direction Q, the battery pack includes a vehicle-use tray, the vehicle-use tray includes a first edge beam 201 and a second edge beam 202 disposed opposite to each other along the direction Q, the support member 4 is the first edge beam 201 and the second edge beam 202, and two ends of the cell 100 are respectively supported by the first edge beam 201 and the second edge beam 202.

In some other embodiments, the support member 4 is a plurality of bottom beams, and the bottom beams are located below the cell array 3. The bottom beams are configured to support the cell array 3, and upper surfaces of the bottom beams may be a plane to form a face-to-face support for the cell array 3. The bottom beam has a rectangular cross section. There may be a plurality of bottom beams, and the plurality of bottom beams may be disposed in parallel and spaced apart from each other or disposed in an intersecting manner. The cell array 3 may be fixed to the bottom beams in a manner such as adhesive bonding or a threaded connector. The battery pack further includes a sealing cover, and the sealing cover and the bottom beams form an accommodating cavity for accommodating the cell array 3. The sealing cover is configured to prevent intrusion of dust, water, and the like.

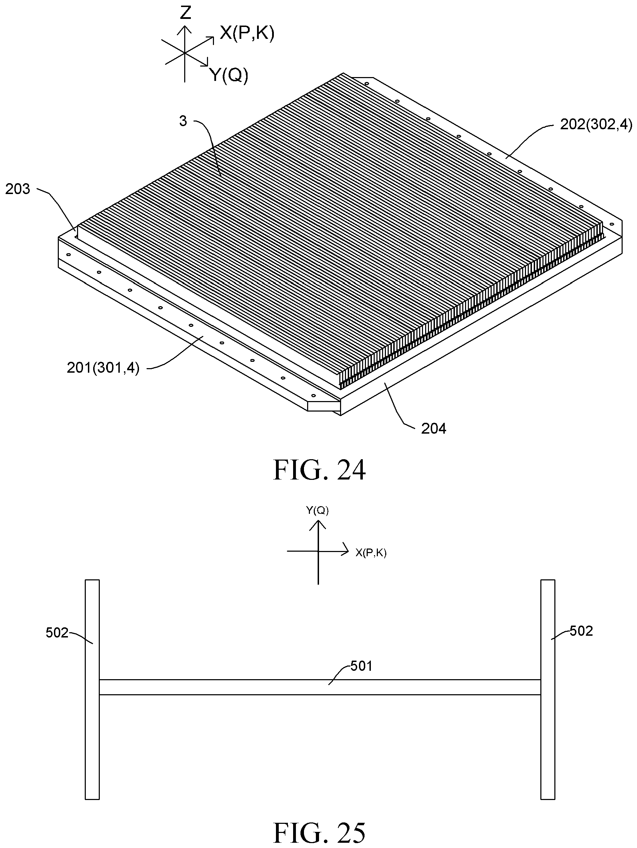

As shown in FIG. 25, the normal direction of two parallel planes corresponding to the first size is the direction Q, the bottom beams include a first beam 501 and a second beam 502 located on the first beam 501 and intersecting the first beam 501, an angle between an extending direction of the first beam 501 and the direction Q ranges from 60 to 90 degrees, and the cell 100 is supported by the first beam 501. In an embodiment shown in FIG. 25, the first beam 501 and the second beam 502 are perpendicularly connected, and a connection manner between the first beam 501 and the second beam 502 includes, but is not limited to, connection of a threaded connector, welding, and the like. The first beam 501 and the second beam 502 may both be linear beams.

Two second beams 502 are included. The two second beams 502 are respectively located on two ends of the first beam 501 and are separately perpendicular to the first beam 501, and the cell 100 is supported by the first beam 501. The second beam 502 protrudes upward (direction Z) relative to the first beam 501. For example, a lower surface of the second beam 502 may be connected to an upper surface of the first beam 501. When the cells 100 are arranged, two outermost cells 100 can be respectively abutted against by side surfaces of two second beams 502 facing toward each other. A center of the cell 100 is located on the first beam 501, a length direction of the cell 100 is perpendicular to a length direction of the first beam 501, and the center of the cell 100 is aligned with the first beam 501, so that a single beam can support the cell 100. In another embodiment, there may be a plurality of first beams 501. The plurality of first beams 501 are disposed in parallel and spaced apart from each other along a second direction.

In another implementation, the normal direction of two parallel planes corresponding to the first size is the direction Q, and the bottom beams may alternatively be a plurality of rectangular beams disposed in parallel and spaced apart from each other. An angle between an extending direction of the rectangular beam and the direction Q ranges from 60 to 90 degrees, and the cell 100 is supported by the rectangular beam. The rectangular beams are evenly distributed along the direction Q, the extending direction of the rectangular beam is perpendicular to the direction Y, and the cells 100 are evenly distributed on the rectangular beams.

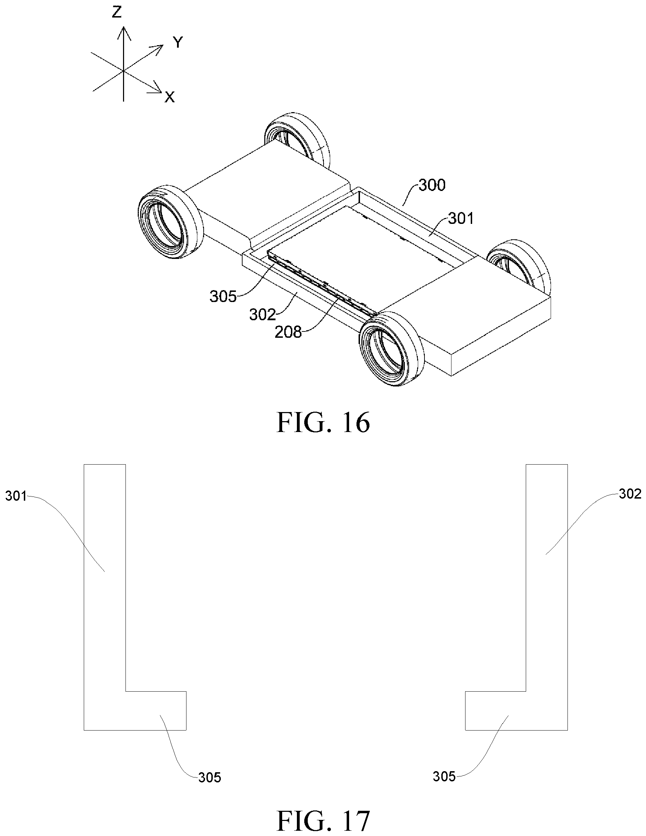

The shape of the bottom beam includes, but is not limited to, a straight line and a rectangle, and may alternatively be a triangle, a trapezoid, or another special shape. In another implementation provided in this application, as shown in FIG. 16, the support member 4 is a vehicle chassis, the cell array 3 is located on the vehicle chassis, and the battery pack 200 may be directly formed on an electric vehicle. In other words, the battery pack 200 is a device formed at any appropriate position on the electric vehicle and used for mounting the cell 100. For example, the battery pack 200 may be formed on the chassis of the electric vehicle.

In some embodiments, a cavity 300 that depresses downward is provided on the vehicle chassis, to help assembly of the cell 100.

In a specific implementation provided in this application, the cavity 300 may include a first side wall 301 and a second side wall 302 disposed opposite to each other. The first side wall 301 may extend downward from the chassis of the electric vehicle to obtain an extending portion of the first side wall 301. The second side wall 302 may extend downward from the chassis of the electric vehicle to obtain an extending portion of the second side wall 302. In this way, in an implementation, the first end of the cell 100 may be supported by the extending portion of the first side wall 301, and the second end of the cell 100 may be supported by the extending portion of the second side wall 302. That is, this application further provides an electric vehicle in which the cells 100 can be arranged according to the foregoing technical solution, and a cavity 300 that has the same characteristic as the separate vehicle-use tray is formed on the electric vehicle, thereby forming the battery pack 200 provided in this application.

In some embodiments, as shown in FIG. 2, a normal direction of two parallel planes corresponding to the first size is a direction Q, a battery placement area is defined in the battery pack 200, the cell array 3 is located in the battery placement area, the battery pack 200 includes a cell array 3, and each of the plurality of cells 100 extends from one side of the battery placement area to another side of the battery placement area along the direction Q. The battery pack accommodates only one cell in the direction Q.

In some embodiments, at least one cell has a second size, the second size is a minimum value of spacings between pairs of imaginary parallel planes that clamp the cell, a normal direction of two parallel planes corresponding to the second size is a direction P, a battery placement area is defined in the battery pack 200, the cell array 3 is located in the battery placement area, N cell arrays 3 are arranged in the battery placement area along the direction P, and M cell arrays 3 are arranged in the battery placement area along the direction Q, the cell arrays 3 are electrically connected to each other by a connector between electrode terminals of the cells, N is greater than 1, and M is greater than 1. An electrode terminal of the last cell of the (N―1)^{th} cell array 3 is connected to an electrode terminal of the first cell of the N^{th} cell array 3 by the connector, and N is greater than 1. In other words, a plurality of cell arrays 3 may be disposed along an arrangement direction of the cells 100 in the battery pack, that is, a plurality of columns of cell arrays 3 are disposed in the battery pack 200.

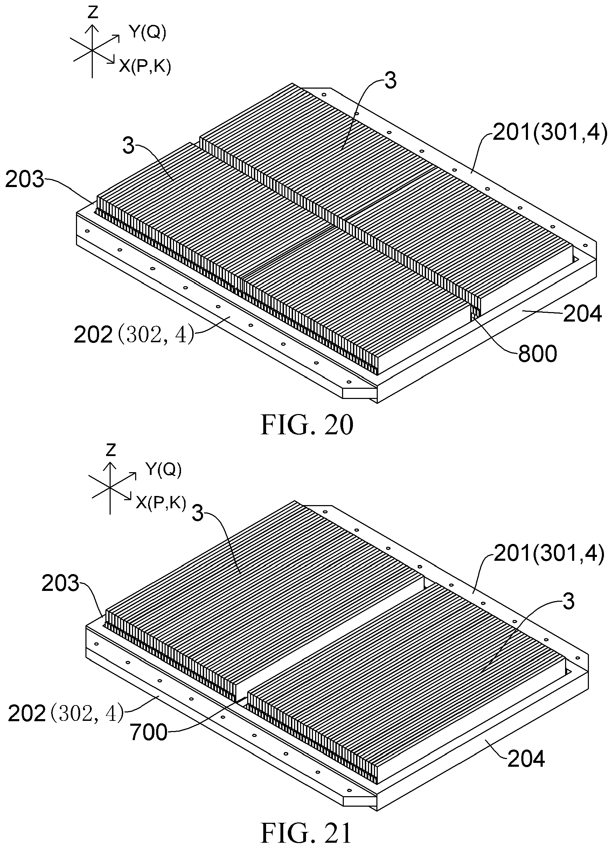

Specifically, as shown in FIG. 21, a first separator 700 divides the shown cell array 3 along the direction P of the battery pack 200 into two cell arrays 3. The last cell 100 of a previous cell array 3 is connected to the first cell of a current cell array 3 by the connector.

According to the battery pack 200 provided in this application, a battery placement area is defined in the battery pack, the cell array 3 is located in the battery placement area, M cell arrays 3 are disposed in the battery placement area along the direction Q, the cell arrays 3 are electrically connected to each other by a connector between electrode terminals of the cells, and M is greater than 1. An electrode terminal of the last cell of the (M―1)^{th} cell array 3 is connected to an electrode terminal of the first cell of the M^{th} cell array 3 by the connector, and M is greater than 1. In other words, a plurality of cells 100 may be accommodated along the extending direction of the cell 100, that is, a plurality of rows of cell arrays 3 are disposed in the battery pack 200.

Specifically, as shown in FIG. 20, a second separator 800 divides the cell array 3 along the direction Q of the battery pack 200 into two cell arrays 3. The last cell 100 of a previous cell array 3 is connected to the first cell of a current cell array 3 by the connector.

According to the battery pack 200 provided in this application, a battery placement area is defined in the battery pack, the cell array 3 is located in the battery placement area, N cell arrays 3 are disposed in the battery placement area along the direction P, M cell arrays 3 are disposed in the battery placement area along the direction Q, the cell arrays 3 are electrically connected to each other by a connector between electrode terminals of the cells, N is greater than 1, and M is greater than 1. In other words, the battery placement area is divided into a plurality of battery placement sub-regions in the direction P of the battery pack, and a plurality of cells 100 may be accommodated along the extending direction Q of the cell 100, that is, a plurality of rows and columns of cell arrays 3 are disposed in the battery pack 200.

It should be noted that in the foregoing implementation, when a plurality of cell arrays distributed along the direction Q, or a plurality of cell arrays distributed along the length direction of the smallest rectangle enclosing the cell, or a plurality of cell arrays distributed along the direction Y are disposed in the battery pack, a plurality of battery placement areas are formed in the battery pack, and the plurality of cell arrays are located in the battery placement areas in a one-to-one correspondence.

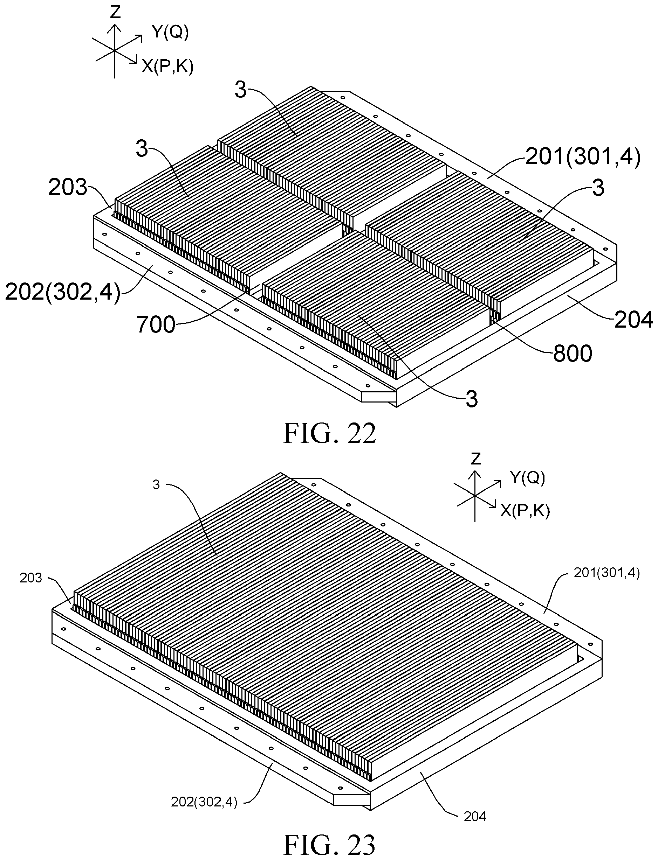

Specifically, as shown in FIG. 22, the first separator 700 and the second separator 800 are disposed in the battery pack 200, and the first separator 700 and the second separator 800 divide the plurality of cells into two rows and two columns of cell arrays 3. Any two cell arrays 3 are connected to each other by a connector between electrode terminals.

In the foregoing description, the first separator 700 and the second separator 800 may be reinforcing ribs or other structural members such as heat insulation foam, which is not limited in this application.

In this application, a quantity of cells 100 in the cell array 3 is not particularly limited. Different quantities of cells 100 may be disposed according to vehicle models and different required powers. In some specific examples of this application, a quantity of cells in the cell array 3 ranges from 60 to 200. In some other specific examples of this application, a quantity of cells in the cell array 3 ranges from 80 to 150.

It should be noted that a quantity of cells 100 in a cell array in this application, and for example, may be two. The battery pack of this application may include one cell array described above, or may include a plurality of cell arrays. The cell arrays may be the same or different. In addition to the foregoing cell arrays, the battery pack may further include a cell of another type, for example, a cell of a smaller size disposed according to internal space of the battery pack.

As shown in FIG. 2 to FIG. 32, according to another aspect of this application, a battery pack 200 is provided, including a cell array 3 and a support member 4.

The cell array 3 includes a plurality of cells 100, the cell 100 has a size A, and the size A is a length of a smallest rectangle enclosing the cell 100. At least one cell 100 satisfies that 600 mm≤size A≤2500 mm, and the cell 100 is supported by the support member 4.

The smallest rectangle enclosing a cell is introduced merely for facilitating understanding of the size A, and does not actually exist in the solution of this application.

Specifically, the smallest rectangle enclosing the cell may be understood as follows: For the cell 100, assuming that there is a cuboid casing, and inner walls of six side surfaces of the cuboid casing are all abutted to an external contour of the cell, the cuboid casing is the smallest rectangle enclosing the cell. The size A is a length of the smallest rectangle enclosing the cell. For the cuboid above, length>height>width.

The cell 100 may be in various shapes, and may be in a regular geometric shape, for example, a square, a circle, a polygon, or a triangle, or may be in an irregular geometric shape. It may be understood that a shape of the cell is not limited in this application.

A support region is provided on an outer surface of the cell 100, and the support region may be disposed on two ends of the cell 100 along a direction of the size A, so that the cell 100 can be supported by the support member 4 along the direction of the size A.

However, it is found by the inventor of this application that the size A of the cell 100 may be designed to range from 600 mm to 2500 mm. Because the cell 100 is long enough, the cell 100 can be directly supported by the support member 4, so that less cross beams 500 and/or longitudinal beams 600 are used in the battery pack 200, and even the cross beam 500 and/or the longitudinal beam 600 can be omitted in the battery pack 200, thereby reducing space occupied by the cross beam 500 and/or the longitudinal beam 600 in the battery pack 200, improving the space utilization of the battery pack 200, enabling as many cells 100 as possible to be arranged inside the battery pack 200, and further improving the capacity, the voltage, and the battery life of the entire battery pack. For example, in an electric vehicle, the design may increase the space utilization from the original space utilization of about 40% to more than 60% or even higher, for example, 80%. That the support member 4 is coupled to the support region may be that the support member 4 is in direct contact with the support region, to support the cell, or may be that the support member 4 is in indirect contact with or connected to the support region by another component, which may be set according to a usage scenario, and is not limited in this application.

The foregoing cell 100 is a pouch battery. When a safety hazard occurs, the pouch battery may swell and crack without exploding, thereby improving safety performance of the cell 100. In addition, a cell core of the pouch battery has a large proportion to improve the volume utilization, and the pouch battery has low processing costs. For example, in an electric vehicle, the design may increase the space utilization from the original space utilization of about 40% to more than 60% or even higher, for example, 80%.

In some embodiments, as shown in FIG. 29 to FIG. 32, at least one cell 100 includes a casing, a cell core located inside the casing, and a reinforcing member configured to reinforce the casing, and the support member 4 is coupled to the reinforcing member to support the cell 100. The support region may be provided on an outer surface of the reinforcing member. A pouch cell 105 includes a casing and a cell core located inside the casing. In this way, an aluminum plastic film of the pouch cell 105 can be prevented from being worn out due to a dislocation of the pouch cell 105, and the rigidity of the cell 100 is relatively large, which can enhance the rigidity of the battery pack 200.

The reinforcing member includes a reinforcing shell 104, the reinforcing shell 104 envelops a casing of at least one cell 100, and the support member 4 is coupled to the reinforcing shell 104 to support the cell 100. The reinforcing shell 104 can completely envelop the pouch cell 105 or envelop a region corresponding to the support member 4 of the pouch cell 105, the reinforcing shell 104 is a rigid shell, the reinforcing shell 104 may be a steel shell or may be made of a composite material. When the reinforcing shell 104 is made of a metal material, a metal casing of the cell 100 has a better heat conducting property, thereby improving heat dissipation efficiency of the cell 100 and optimizing a heat dissipation effect.

The reinforcing shell 104 may be partially bored, to reduce a weight.

In the embodiments shown in FIG. 29 and FIG. 30, each reinforcing shell 104 envelops one pouch cell 105. In the embodiments shown in FIG. 31 and FIG. 32, each reinforcing shell 104 envelops a plurality of pouch cells 105.

In some embodiments, the cell 100 includes electrode terminals configured to lead out an internal current, the reinforcing member includes a current converging member, the current converging member is configured to electrically connect electrode terminals of the plurality of cells 100, and the support member 4 is coupled to the current converging member to support the cells 100. In this way, the plurality of cells 100 are arranged on the support member 4, and the plurality of cells 100 are also electrically connected.

In addition, because there is no need to arrange the cross beam and/or the longitudinal beams in the battery pack 200, on the one hand, a manufacturing process of the battery pack 200 is simplified, assembly complexity of the cell 100 is reduced, and production costs are reduced, and on the other hand, a weight of the battery pack 200 is reduced, thereby achieving a light weight of the battery pack. In particular, when the battery pack is mounted on an electric vehicle, the battery life of the electric vehicle may further be improved, and a light weight of the electric vehicle is achieved.

In some embodiments, 600 mm≤size A≤1500 mm. For example, 600 mm≤size A≤1000 mm. The cell 100 of such a length is long enough to be supported by the supported by the support member 4, and the cell 100 of such a length is not excessively long. When applied to the battery pack 200, the cell 100 has the rigidity that is large enough.

In this application, a specific form of the battery pack is not particularly limited. It is only necessary to limit that the battery pack includes the support member 4, the cell array 3 is located on the support member 4, and the cells 100 are supported by the support member 4. A specific structure of the support member 4 is not limited in this application provided that the cells 100 can be supported by the support member 4. For a specific structure of the support member 4, refer to the descriptions below. The cells 100 are supported by the support member 4. The cells 100 may be directly supported by the support member 4, that is, separately placed on the support member 4, or may be fixed on the support member 4. A specific fixing manner is described in detail below. Particular supporting and fixing manners are not limited in this application.

The foregoing support member 4 is configured to support the cell array 3. The support member 4 is generally a rigid structure. The support member 4 can be an independently machined tray or a rigid support structure formed on a chassis of a vehicle, and can be easily mounted on a complete vehicle or another device.

In some embodiments, the plurality of cells are arranged along a direction K, and the direction K is a width direction of the smallest rectangle enclosing at least one cell in the cell array 3.

The cell 100 has a size B, the cell has a size B, the size B is the width of the smallest rectangle enclosing the cell, a normal direction of two parallel planes corresponding to the size B is the direction K, and the plurality of cells are arranged along the direction K of at least one cell.

At least one cell satisfies that 10≤size A/size B≤208. In some embodiments, at least one cell satisfies that 23≤size A/size B≤208. In some embodiments, 50≤size A/size B≤70. It is found by the inventor through a large quantity of experiments that for a cell 100 that satisfies the foregoing size requirements, the thickness of the cell 100 in a direction of the size B can be reduced on the basis that the rigidity satisfies the support requirements, so that the cell 100 has a higher heat dissipation capacity.

In some embodiments, the plurality of cells 100 are arranged along a direction K, and the direction K is a height direction of the smallest rectangle enclosing at least one cell 100 in the cell array 3. The cell 100 has a size C, and the size C is a height of the smallest rectangle enclosing the cell 100.

At least one cell 100 satisfies that 10≤size A/size C≤208. For example, 23≤size A/size C≤208. For example, 50≤size A/size C≤70. It is found by the inventor through a large quantity of experiments that for a cell 100 that satisfies the foregoing size requirements, the thickness of the cell 100 in a direction of the size C can be reduced on the basis that the rigidity satisfies the support requirements, so that the cell 100 has a higher heat dissipation capacity.

The battery pack 200 further includes two side plate parts disposed opposite to each other on two sides of the cell array 3 and configured to clamp the cell array 3. The side plate parts clamp the cell array 3, and have a function of limiting the plurality of cells 100 from swelling and deforming, thereby ensuring starting of an anti-explosion valve 103 and/or a CID. Specifically, in some embodiments, as shown in FIG. 4, the side plate parts may be a third edge beam 203 and a fourth edge beam 204. In some other embodiments, as shown in FIG. 12, the side plate parts may be a first side plate 209 and a second side plate 210.

In some embodiments, as shown in FIG. 3 and FIG. 20 to FIG. 24, the battery pack 200 includes a vehicle-use tray, the vehicle-use tray includes a first edge beam 201 and a second edge beam 202 disposed opposite to each other along a length direction of the smallest rectangle enclosing the cell 100, the support member 4 is the first edge beam 201 and the second edge beam 202, and two ends of the cell 100 are respectively supported by the first edge beam 201 and the second edge beam 202.

In some other embodiments, the support member 4 is a plurality of bottom beams, and the bottom beams are located below the cell array 3. The bottom beams are configured to support the cell array 3, and upper surfaces of the bottom beams may be a plane to form a face-to-face support for the cell array 3. The bottom beam has a rectangular cross section. There may be a plurality of bottom beams, and the plurality of bottom beams may be disposed in parallel and spaced apart from each other or disposed in an intersecting manner. The cell array 3 may be fixed to the bottom beams in a manner such as adhesive bonding or a threaded connector. The battery pack further includes a sealing cover, and the sealing cover and the bottom beams form an accommodating cavity for accommodating the cell array 3. The sealing cover is configured to prevent intrusion of dust, water, and the like.

As shown in FIG. 25, the bottom beams include a first beam 501 and a second beam 502 located on the first beam 501 and intersecting the first beam 501, an angle between an extending direction of the first beam 501 and the length direction of the smallest rectangle enclosing the cell ranges from 60 to 90 degrees, and the cell 100 is supported by the first beam 501. In an embodiment shown in FIG. 25, the first beam 501 and the second beam 502 are perpendicularly connected, and a connection manner between the first beam 501 and the second beam 502 includes, but is not limited to, connection of a threaded connector, welding, and the like. The first beam 501 and the second beam 502 may both be linear beams.

Two second beams 502 are included. The two second beams 502 are respectively located on two ends of the first beam 501 and are separately perpendicular to the first beam 501, and the cell 100 is supported by the first beam 501. The second beam 502 protrudes upward (direction Z) relative to the first beam 501. For example, a lower surface of the second beam 502 may be connected to an upper surface of the first beam 501. When the cells 100 are arranged, two outermost cells 100 can be respectively abutted against by side surfaces of two second beams 502 facing toward each other. A center of the cell 100 is located on the first beam 501, a length direction of the cell 100 is perpendicular to a length direction of the first beam 501, and the center of the cell 100 is aligned with the first beam 501, so that a single beam can support the cell 100. In another embodiment, there may be a plurality of first beams 501. The plurality of first beams 501 are disposed in parallel and spaced apart from each other along a second direction.

The shape of the bottom beam includes, but is not limited to, a straight line and a rectangle, and may alternatively be a triangle, a trapezoid, or another special shape. In another implementation provided in this application, as shown in FIG. 16, the support member 4 is a vehicle chassis, the cell array 3 is located on the vehicle chassis, and the battery pack 200 may be directly formed on an electric vehicle. In other words, the battery pack 200 is a device formed at any appropriate position on the electric vehicle and used for mounting the cell 100. For example, the battery pack 200 may be formed on the chassis of the electric vehicle.

In some embodiments, a cavity 300 that depresses downward is provided on the vehicle chassis, to help assembly of the cell 100.

In a specific implementation provided in this application, the cavity 300 may include a first side wall 301 and a second side wall 302 disposed opposite to each other. The first side wall 301 may extend downward from the chassis of the electric vehicle to obtain an extending portion of the first side wall 301. The first side wall 302 may extend downward from the chassis of the electric vehicle to obtain an extending portion of the second side wall 302. In this way, in an implementation, the first end of the cell 100 may be supported by the extending portion of the first side wall 301, and the second end of the cell 100 may be supported by the extending portion of the second side wall 302. That is, this application further provides an electric vehicle in which the cells 100 can be arranged according to the foregoing technical solution, and a cavity 300 that has the same characteristic as the separate vehicle-use tray is formed on the electric vehicle, thereby forming the battery pack 200 provided in this application.

In some embodiments, as shown in FIG. 2, a battery placement area is defined in the battery pack 200, the cell array 3 is located in the battery placement area, the battery pack 200 includes a cell array 3, and each of the plurality of cells 100 extends from one side of the battery placement area to another side of the battery placement area along the length direction of the smallest rectangle enclosing the cell 100. The battery pack 200 accommodates only one cell in the length direction of the smallest rectangle enclosing the cell 100.

In some embodiments, a battery placement area is defined in the battery pack 200, the cell array 3 is located in the battery placement area, N cell arrays 3 are disposed in the battery placement area along a width direction of the smallest rectangle enclosing the cell, the cell arrays 3 are electrically connected to each other by a connector between electrode terminals of the cells, and N is greater than 1.

M cell arrays 3 are disposed in the battery placement area along a length direction of the smallest rectangle enclosing the cell, the cell arrays 3 are electrically connected to each other by a connector between electrode terminals of the cells, and M is greater than 1.

Specifically, as shown in FIG. 21, a first separator 700 divides the shown cell array 3 along the direction K of the battery pack 200 into two cell arrays 3. The last cell 100 of a previous cell array 3 is connected to the first cell of a next cell array 3 by the connector.

According to the battery pack 200 provided in this application, a battery placement area is defined in the battery pack, the cell array 3 is located in the battery placement area, M cell arrays 3 are disposed in the battery placement area along the direction Q, the cell arrays 3 are electrically connected to each other by a connector between electrode terminals of the cells, and M is greater than 1. An electrode terminal of the last cell of the (M―1)^{th} cell array 3 is connected to an electrode terminal of the first cell of the M^{th} cell array 3 by the connector, and M is greater than 1. In other words, a plurality of cells 100 may be accommodated along the extending direction of the cell 100, that is, a plurality of rows of cell arrays 3 are disposed in the battery pack 200.

Specifically, as shown in FIG. 20, a second separator 800 divides the cell array 3 along the direction Q of the battery pack 200 into two cell arrays 3. The last cell 100 of a previous cell array 3 is connected to the first cell of a next cell array 3 by the connector.

According to the battery pack 200 provided in this application, a battery placement area is defined in the battery pack, the cell array 3 is located in the battery placement area, N cell arrays 3 are disposed in the battery placement area along the direction K, M cell arrays 3 are disposed in the battery placement area along the direction Q, the cell arrays 3 are electrically connected to each other by a connector between electrode terminals of the cells, N is greater than 1, and M is greater than 1. In other words, the battery placement area is divided into a plurality of battery placement sub-regions in the direction K of the battery pack, and a plurality of cells 100 may be accommodated along the extending direction Q of the cell 100, that is, a plurality of rows and columns of cell arrays 3 are disposed in the battery pack 200.

Specifically, as shown in FIG. 22, the first separator 700 and the second separator 800 are disposed in the battery pack 200, and the first separator 700 and the second separator 800 divide the plurality of cells into two rows and two columns of cell arrays 3. Any two cell arrays 3 are connected to each other by a connector between electrode terminals.

In the foregoing description, the first separator 700 and the second separator 800 may be reinforcing ribs or other structural members such as heat insulation foam, which is not limited in this application.

A battery placement area is defined in the battery pack, the cell array 3 is located in the battery placement area, J cell arrays 3 are disposed in the battery placement area along a height direction of the smallest rectangle enclosing the cell, the cell arrays 3 are electrically connected to each other by a connector between electrode terminals of the cells, and J is greater than 1.

In this application, a quantity of cells 100 in the cell array 3 is not particularly limited. Different quantities of cells 100 may be disposed according to vehicle models and different required powers. In some specific examples of this application, a quantity of cells in the cell array 3 ranges from 60 to 200. In some other specific examples of this application, a quantity of cells in the cell array 3 ranges from 80 to 150.

As shown in FIG. 2 to FIG. 32, according to still another aspect of this application, a battery pack 200 is provided, including a cell array 3 and a support member 4.

The cell array 3 includes a plurality of cells 100, at least one cell 100 satisfies that: a battery body and electrode terminals extending from the battery body and configured to lead out an external current from the battery body are included, the battery body is a rough cuboid, a length of the battery body is L, and 600 mm≤L≤2500 mm. The cell 100 is supported by the support member 4.

It should be noted that, that the battery body is a rough cuboid may be understood as that the battery body may be a cuboid, a cube, or a rough cuboid or a cube having a special shape locally; or may present an approximate cuboid or cube as a whole, but partially have a gap, a bulge, a chamfer, an arc, or a curve.

In the related art, because a size of the cell 100 is relatively small, a length L of the battery body is relatively short, which is much smaller than a size of the battery pack in the direction Y or the direction X, and the cell 100 cannot be directly mounted, the cross beam 500 and/or the longitudinal beam 600 (as shown in FIG. 1) need or needs to be disposed in the battery pack 200, to facilitate assembly of the cell 100. When the cell 100 is mounted into the battery pack 200 through the battery module 400, the battery module is fixed to the cross beam 500 and/or longitudinal beam 600 through a fastener.

Because the cross beam 500 and/or the longitudinal beam 600 are disposed in the battery pack in the related art, the cross beam 500 and/or the longitudinal beam 600 occupy large mounting space for accommodating cells in the battery pack 200, resulting in the low volume utilization of the battery pack. Generally, the volume utilization of the battery pack 200 is about 40% or even lower. In other words, in the related art, only about 40% of the space in the battery pack 200 may be used for mounting the cells, resulting in a limited quantity of cells 100 to be accommodated in the battery pack 200, resulting in the limited capacity and the limited voltage of the entire battery pack, and the shorter battery life of the battery pack.

However, it is found by the inventor of this application that the length L of the cell 100 may be designed to range from 600 mm to 2500 mm. Because the battery body of the cell 100 is long enough, a support region is provided on an outer surface of the cell 100, and the cell 100 can be directly supported in the support region, so that less cross beams 500 and/or longitudinal beams 600 are used in the battery pack 200, and even the cross beam 500 and/or the longitudinal beam 600 can be omitted in the battery pack 200, thereby reducing space occupied by the cross beam 500 and/or the longitudinal beam 600 in the battery pack 200, improving the space utilization of the battery pack 200, enabling as many cells 100 as possible to be arranged inside the battery pack 200, and further improving the capacity, the voltage, and the battery life of the entire battery pack. For example, in an electric vehicle, the design may increase the space utilization from the original space utilization of about 40% to more than 60% or even higher, for example, 80%. That the support member 4 is coupled to the support region may be that the support member 4 is in direct contact with the support region, to support the cell, or may be that the support member 4 is in indirect contact with or connected to the support region by another component, which may be set according to a usage scenario, and is not limited in this application.

In addition, because there is no need to arrange the cross beam and/or the longitudinal beams in the battery pack 200, on the one hand, a manufacturing process of the battery pack 200 is simplified, assembly complexity of the cell 100 is reduced, and production costs are reduced, and on the other hand, a weight of the battery pack 200 is reduced, thereby achieving a light weight of the battery pack. In particular, when the battery pack is mounted on an electric vehicle, the battery life of the electric vehicle may further be improved, and a light weight of the electric vehicle is achieved.

The foregoing cell 100 is a pouch battery. When a safety hazard occurs, the pouch battery may swell and crack without exploding, thereby improving safety performance of the cell 100. In addition, a cell core of the pouch battery has a large proportion to improve the volume utilization, and the pouch battery has low processing costs. For example, in an electric vehicle, the design may increase the space utilization from the original space utilization of about 40% to more than 60% or even higher, for example, 80%.

In some embodiments, as shown in FIG. 29 to FIG. 32, at least one cell 100 includes a casing, a cell core located inside the casing, and a reinforcing member configured to reinforce the casing, and the support member 4 is coupled to the reinforcing member to support the cell 100. The support region may be provided on an outer surface of the reinforcing member. A pouch cell 105 includes a casing and a cell core located inside the casing. In this way, an aluminum plastic film of the pouch cell 105 can be prevented from being worn out due to a dislocation of the pouch cell 105, and the rigidity of the cell 100 is relatively large, which can enhance the rigidity of the battery pack 200.

The reinforcing member includes a reinforcing shell 104, the reinforcing shell 104 envelops a casing of at least one cell 100, and the support member 4 is coupled to the reinforcing shell 104 to support the cell 100. The reinforcing shell 104 can completely envelop the pouch cell 105 or envelop a region corresponding to the support member 4 of the pouch cell 105, the reinforcing shell 104 is a rigid shell, the reinforcing shell 104 may be a steel shell or may be made of a composite material. When the reinforcing shell 104 is made of a metal material, a metal casing of the cell 100 has a better heat conducting property, thereby improving heat dissipation efficiency of the cell 100 and optimizing a heat dissipation effect.

The reinforcing shell 104 may be partially bored, to reduce a weight.

In the embodiments shown in FIG. 29 and FIG. 30, each reinforcing shell 104 envelops one pouch cell 105. In the embodiments shown in FIG. 31 and FIG. 32, each reinforcing shell 104 envelops a plurality of pouch cells 105.

In some embodiments, the cell 100 includes electrode terminals configured to lead out an internal current, the reinforcing member includes a current converging member, the current converging member is configured to electrically connect electrode terminals of the plurality of cells 100, and the support member 4 is coupled to the current converging member to support the cells 100. In this way, the plurality of cells 100 are arranged on the support member 4, and the plurality of cells 100 are also electrically connected.

In this application, a specific form of the battery pack is not particularly limited. It is only necessary to limit that the battery pack includes the support member 4, the cell array 3 is located on the support member 4, and the cells 100 are supported by the support member 4. A specific structure of the support member 4 is not limited in this application provided that the cells 100 can be supported by the support member 4. For a specific structure of the support member 4, refer to the descriptions below. The cells 100 are supported by the support member 4. The cells 100 may be directly supported by the support member 4, that is, separately placed on the support member 4, or may be fixed on the support member 4. A specific fixing manner is described in detail below. Particular supporting and fixing manners are not limited in this application.

The foregoing support member 4 is configured to support the cell array 3. The support member 4 is generally a rigid structure. The support member 4 can be an independently machined tray or a rigid support structure formed on a chassis of a vehicle. The support member 4 is configured to maintain the battery pack in a complete shape, and help to mount the battery pack on a complete vehicle or another device.

Because in this application, the battery body of the cell 100 has a relatively large size in terms of the length L, the battery body can produce a supporting effect, so that a reinforcing effect of the cross beam and the longitudinal beam in the battery pack is reduced, the space utilization of the battery pack is higher, and more cells can be disposed.

The battery body of the cell 100 has three mutually perpendicular directions, namely, a direction X, a direction Y, and a direction Z. Every two of the direction X, the direction Y, and the direction Z are perpendicular to each other, the direction X is an arrangement direction of the cell 100, the direction Y is a length direction of the cell 100, and the direction Z is a height direction of the cell 100. For example, in embodiments shown in FIG. 20 to FIG. 23, when the battery pack 200 is mounted on a complete vehicle, the length direction of the battery pack 200 may be parallel to a longitudinal direction of a vehicle 1, the width direction of the battery pack 200 may be parallel to a transverse direction of the vehicle 1, the direction Y may be parallel to the transverse direction of the vehicle 1, the direction X may be parallel to the longitudinal direction of the vehicle 1, and the direction Z may be parallel to a vertical direction of the vehicle 1. For example, in an embodiment shown in FIG. 24, when the battery pack 200 is mounted on a complete vehicle, the length direction of the battery pack 200 may be parallel to a longitudinal direction of a vehicle 1, the width direction of the battery pack 200 may be parallel to a transverse direction of the vehicle 1, the direction Y may be parallel to the longitudinal direction of the vehicle 1, the direction X may be parallel to the transverse direction of the vehicle 1, and the direction Z may be parallel to a vertical direction of the vehicle 1. When the battery pack 200 is mounted on a complete vehicle, the direction X, the direction Y, and the direction Z may have other correspondences to actual directions of the vehicle, and actual correspondences thereof depend on a mounting direction of the battery pack 200.

Unless otherwise specified, a traveling direction of a vehicle in this application is a longitudinal direction of the vehicle, a direction perpendicular to and coplanar with the traveling direction of the vehicle is a transverse direction of the vehicle, which is generally a horizontal direction, and an up-down direction is a perpendicular direction of the vehicle, which is generally a vertical direction.

In some embodiments, the cell 100 may be arranged sequentially in the direction X, and a quantity thereof may not be limited. In the foregoing arrangement manner, because the quantity of cells arranged in the battery pack is increased, heat dissipation performance of the entire battery pack is relatively poor. To improve safety performance of the entire battery pack, L/H or L/D is limited, so that a thickness along the direction X and a height along the direction Z of the battery pack may be relatively small. A surface area of a single cell is larger than a surface area of a cell in the related art, so that a heat dissipation area of the cell can be increased, and heat dissipation efficiency of the cell is improved, thereby improving safety of the entire battery pack and making the battery pack safer and more reliable.

The plurality of cells 100 have a plurality of arrangement manners in the cell array 3. A length of the battery body is L, a thickness is D, a height is H, a thickness direction is a direction X, a length direction is a direction Y, and a height direction is a direction Z.

In an implementation provided in this application, the plurality of cells 100 may be arranged along the direction X spaced apart from each other or tightly, or are tightly arranged along the direction X in this implementation as shown in FIG. 2, to fully utilize the space.

In some embodiments, the plurality of cells 100 are arranged along a direction X of at least one cell in the cell array 3, and the direction X is a thickness direction of any cell 100 in the cell array 3. The thickness of the battery body is D, and at least one cell 100 satisfies 10≤L/D≤208, for example, 23≤L/D≤208, and for example, 50≤L/D≤70. It is found by the inventor through a large quantity of experiments that for a cell 100 that satisfies the foregoing size requirements, the thickness of the cell 100 in the direction X can be reduced on the basis that the rigidity satisfies the support requirements, so that the cell 100 has a higher heat dissipation capacity.

In some other embodiments, the plurality of cells 100 are arranged along the direction Z of at least one cell in the cell array 3. The direction Z is a height direction of any cell 100 in the cell array 3. The height of the battery body is H, and at least one cell 100 satisfies 10≤L/D≤208, for example, 23≤L/D≤208, and for example, 50≤L/D≤70. It is found by the inventor through a large quantity of experiments that for a cell 100 that satisfies the foregoing size requirements, the thickness of the battery body in the direction Z can be reduced on the basis that the rigidity satisfies the support requirements, so that the battery body has a higher heat dissipation capacity.

It should be noted that when being arranged, the plurality of cells 100 may form an array with ends flush, or may form an angle with the direction X or direction Z, that is, arranged obliquely. Placement directions of a plurality of cells 100 may be the same, or may be partially different or different from each other provided that the plurality of cells 100 are distributed along a predetermined direction.

In some embodiments, 600 mm≤L≤1500 mm, and preferably, 600 mm≤L≤1000 mm. The cell 100 of the length has a relatively large length, and during application to the battery pack 200, only a single cell 100 needs to be arranged along a first direction.

In some embodiments, a volume of the battery body of the cell 100 is V, and at least one cell 100 satisfies 0.0005 mm^{―2}≤L/V≤0.002 mm^{―2}. It is found by the inventor through a large quantity of experiments that the battery body has a small cross section, and the battery body has a good heat dissipation effect when the cell 100 satisfies the foregoing limitations, so that a difference between temperatures of an interior and a periphery of the battery body is small.

In another implementation provided in this application, a ratio of a surface area S of a cell body of the cell 100 to the volume V satisfies that 0.1 mm^{―1}≤S/V≤0.35 mm^{―1}. The ratio may be achieved through the foregoing longer and thinner cell 100 or through size adjustment. By controlling the ratio of the surface area S to the volume V of the cell 100, it may be ensured that while the length of the battery body extends along the direction Y, the battery body has a sufficient heat dissipation area, to ensure the heat dissipation effect of the cell 100.

In some embodiments, a volume of the battery body is V, and a relationship between a height H of the battery body and the volume V of the battery body is 0.0001 mm^{― 2}≤H/V≤0.00015 mm^{―2}.

It should be noted that the surface area of the cell refers to a sum of areas of all surfaces of the cell.

As shown in FIG. 3, FIG. 4, and FIG. 20 to FIG. 24, a length of the battery body is L, a thickness is D, a height is H, a thickness direction is a direction X, a length direction is a direction Y, and a height direction is a direction Z. The height H of the battery body is greater than the thickness D of the battery body, at least one cell satisfies 23≤L/D≤208 and 4≤L/H≤21, and a plurality of cells are arranged along the direction X of at least one cell in the cell array 3. In solutions of some embodiments, at least one cell satisfies 9≤L/H≤13. It is found by the inventor through a large quantity of experiments that for a battery body that satisfies the foregoing size requirements, the thickness of the battery body in the direction X can be reduced on the basis that the rigidity satisfies the support requirements, so that the battery body has a higher heat dissipation capacity. In addition, the cells 100 can be conveniently stacked tightly in the direction X.

In some exemplary implementations of this application, at least one cell 100 includes a first end and a second end along the direction Y, at least one of the first end and the second end includes electrode terminals configured to lead out an internal current of the cell, and the electrode terminals of the cells 100 are electrically connected to each other by a connector.

The "first end" and "second end" of the cell 100 are used for describing an orientation of the cell 100, but are not used for limiting and describing a specific structure of the cell 100. For example, the first end and the second end are not used for limiting and describing a positive electrode and a negative electrode of the cell 100. In an implementation, for the cell 100, as shown in FIG. 2 to FIG. 4, a first electrode terminal 101 of the cell 100 is led out by the first end of the cell 100 toward the direction Y, and a second electrode terminal 102 of the cell 100 is led out by the second end of the cell 100 toward the direction Y In other words, the length direction of the cell 100 may be a current direction inside the cell 100, that is, the current direction inside the cell 100 is the direction Y In this way, because the current direction is the same as the length direction of the cell 100, the cell 100 has a larger effective heat dissipation area and better heat dissipation efficiency. The first electrode terminal 101 may be the positive electrode of the cell 100, and the second electrode terminal 102 is the negative electrode of the cell 100. Alternatively, the first electrode terminal 101 is the negative electrode of the cell 100, and the second electrode terminal 102 is the positive electrode of the cell 100. The electrode terminals of the cells 100 are connected in series and parallel by a connector.

In an implementation, thickness directions of at least some cells 100 extend along the direction X, that is, a plurality of cells are arranged along the thickness directions of the cells.

In some embodiments, the cell array 3 includes a plurality of cells 100 arranged sequentially along the direction X, a length of the cell 100 extends along the direction Y, and a height extends along the direction Z. That is, a plurality of cells 100 arranged along a thickness direction and extend along a length direction, so that space of the battery pack can be fully utilized, to dispose more cells.

The cell 100 has a first end and a second end in the length direction, the first end and/or the second end include or includes electrode terminals configured to lead out an internal current of the cell, and the electrode terminals of the cells are electrically connected to each other by a connector.

The "first end" and "second end" of the cell 100 are used for describing an orientation of the cell 100, but are not used for limiting and describing a specific structure of the cell 100. For example, the first end and the second end are not used for limiting and describing a positive electrode and a negative electrode of the cell 100. In an implementation, for the cell 100, as shown in FIG. 2 to FIG. 4, a first electrode terminal 101 of the cell 100 is led out by the first end of the cell 100 in the length direction, and a second electrode terminal 102 of the cell 100 is led out by the second end of the cell 100 in the length direction. In other words, the length direction of the cell 100 may be a current direction inside the cell 100, that is, the current direction inside the cell 100 is the direction Y In this way, because the current direction is the same as the length direction of the cell 100, the cell 100 has a larger effective heat dissipation area and better heat dissipation efficiency. The first electrode terminal 101 may be the positive electrode of the cell 100, and the second electrode terminal 102 is the negative electrode of the cell 100. Alternatively, the first electrode terminal 101 is the negative electrode of the cell 100, and the second electrode terminal 102 is the positive electrode of the cell 100. The electrode terminals of the cells 100 are connected in series and parallel by a connector.

In the related art, it is always one of problems to be resolved in the field of battery technologies that sizes of the rectangular cell 100 are designed to cause the cell has both an appropriate battery capacity and a good heat dissipation effect.

In an implementation provided in this application, a ratio of the length L to the thickness D of the battery body of at least one cell 100 satisfies 23≤L/D≤208. At this ratio, a cell 100 having an appropriate length and a smaller thickness can be obtained. An appropriate resistance value, a relatively large heat dissipation area, and relatively high heat dissipation efficiency can be maintained while ensuring that the length of the cell 100 extends in the first direction, leading to good adaptivity to various vehicle models.

In an implementation provided in this application, a ratio of the length L to the thickness D of the battery body of at least one cell 100 satisfies 50≤L/D≤70. At this ratio, a cell 100 having an appropriate length can be obtained, and rigidity of the cell 100 is also large enough, to facilitate machining, conveying, and assembly. When the cell 100 is mounted to the battery pack housing, the characteristic that the rigidity of the cell 100 is large is utilized, so that the cell 100 may be used as a reinforcing beam. On the other hand, an appropriate resistance value, a relatively large heat dissipation area, and relatively high heat dissipation efficiency can be maintained while ensuring that the length of the cell 100 extends in the first direction, leading to good adaptivity to various vehicle models.

According to the battery pack 200 provided in this application, in the direction X, the battery pack 200 further includes two side plate parts disposed opposite to each other on two sides of the cell array 3 and configured to clamp the cell array 3. The side plate parts clamp the cell array 3, and have a function of limiting the plurality of cells 100 from swelling and deforming, thereby ensuring starting of an anti-explosion valve 103 and/or a CID. Specifically, in some embodiments, as shown in FIG. 4, the side plate parts may be a third edge beam 203 and a fourth edge beam 204. In some other embodiments, as shown in FIG. 12, the side plate parts may be a first side plate 209 and a second side plate 210.

According to the battery pack provided in this application, a sealing cover 220 is further included, and the sealing cover 220 and the support member 4 form an accommodating cavity for accommodating the cell array 3. The sealing cover 220 and the support member 4 define an accommodating cavity for accommodating the cell. The sealing cover 220 produces waterproof and moisture-proof effects.

The battery pack 200 includes a vehicle-use tray, and the vehicle-use tray is a separately-produced vehicle-use tray for accommodating and mounting the cell 100. As shown in FIG. 16, FIG. 18, and FIG. 19, after the cell 100 is mounted in the vehicle-use tray, the vehicle-use tray may be mounted on the vehicle through a fastener, for example, suspended from the chassis of the electric vehicle.

The vehicle-use tray includes a first edge beam 201 and a second edge beam 202 disposed opposite to each other along the direction Y, the support member 4 is the first edge beam 201 and the second edge beam 202, the first end of the cell 100 is supported by the first edge beam 201, and the second end of the cell 100 is supported by the second edge beam 202. Under the technical concept of this application, a specific structure of the first edge beam 201 and the second edge beam 202 is not limited, the first edge beam 201 and the second edge beam 202 are disposed opposite to each other. The first edge beam 201 and the second edge beam 202 may be parallel to each other, or may be disposed at an angle, and may be a straight line structure or a curved structure. The first edge beam 201 may be rectangular, cylindrical, or polygonal, which is not particularly limited in this application.

The first edge beam 201 and the second edge beam 202 are disposed opposite to each other along the direction Y, the plurality of cells 100 are disposed between the first edge beam 201 and the second edge beam 202, and two ends of the cell 100 are respectively supported by the first edge beam 201 and the second edge beam 202. In an embodiment, a first end of each cell 100 is supported by the first edge beam 201, and a second end of each cell 100 is supported by the second edge beam 202.

In other words, each cell 100 extends between the first edge beam 201 and the second edge beam 202. A plurality of cells 100 are arranged along a length direction of the first edge beam 201 and the second edge beam 202, that is, along the direction X.

The first end and the second end of the cell 100 are respectively supported on the first edge beam 201 and the second edge beam 202. The cell 100 may be directly supported by the first edge beam 201 and the second edge beam 202, that is, the cell is respectively placed on the first edge beam 201 and the second edge beam 202, or may be further fixed on the first edge beam 201 and the second edge beam 202. A specific fixing manner is described below in detail. Particular supporting and fixing manners are not limited in this application.

In some embodiments of this application, the first end of each cell 100 may be directly or indirectly supported by the first edge beam 201, and the second end of each cell 100 may be directly or indirectly supported by the second edge beam 202. The direct supporting means that the first end of the cell 100 is in direct contact with, fits, and is supported by the first edge beam 201, and the second end of the cell 100 is in direct contact with and fits the second edge beam 202. The indirect supporting means that, for example, in some embodiments, the first end of the cell 100 fits and is supported by the first edge beam 201 through a first end plate 207, and the second end of the cell 100 fits and is supported by the second edge beam 202 through a second end plate 208.

It should be noted that the cell 100 may be perpendicular to the first edge beam 201 and/or the second edge beam 202, or disposed at an acute angle or an obtuse angle to the first edge beam 201 and/or the second edge beam 202. For example, when the first edge beam 201 and the second edge beam 202 are parallel to each other, the first edge beam 201, the second edge beam 202, and the cell 100 may form a rectangle, a square, a parallelogram, a circular sector, or another structure. When the first edge beam 201 and the second edge beam 202 are at an angle, the first edge beam 201, the second edge beam 202, and the cell 100 may form a trapezoid, a triangle, or another structure. In this application, an angular relationship between the first edge beam 201 and the second edge beam 202, an angular relationship between the cell 100 and the first edge beam 201, and an angular relationship between the cell 100 and the second edge beam 202 are not limited.

The first edge beam 201 and the second edge beam 202 are located on two opposite sides of the tray along the direction Y, that is, as shown in FIG. 2, the first edge beam 201 and the second edge beam 202 are located on edges of the tray along the direction Y, and the first edge beam 201 and the second edge beam 202 are outermost sides of the tray.

In addition, the aforementioned "first end" and "second end" of the cell 100 are used for describing an orientation of the cell 100, but are not used for limiting and describing a specific structure of the cell 100. For example, the first end and the second end are not used for limiting and describing a positive electrode and a negative electrode of the cell 100. In other words, in this application, one end of the cell 100 supported by the first edge beam 201 is the first end, and the other end of the cell 100 supported by the second edge beam 202 is the second end.

In the vehicle-use tray, because a vehicle body has a large width, for example, 1.2 m to 2 m, and has a large length, for example, 2 m to 5 m, Therefore, different vehicle models have different corresponding vehicle body widths and vehicle body lengths. Due to a larger width and a larger length of the vehicle body, the tray disposed at the bottom of the vehicle body has greater overall sizes. Due to the relatively large size of the tray, in the related art, in addition to that edge beams located on sides need to be disposed on the tray, and cross beams also need to be disposed internally in the tray, to provide a sufficient supporting force and sufficient structural strength for cells disposed internally. After the cross beams are added to the vehicle-use tray, a weight capacity and internal space of the vehicle-use tray are occupied by the cross beams. As a result, there is only small space that can be effectively used inside the tray. In addition, due to the existence of the cross beams, a plurality of battery modules need to be disposed inside the tray in a width direction and a length direction, to coordinate with mounting of the cross beams.

However, if the cross beams are removed, the module layout manner and the cell layout manner in the related art cannot provide sufficient structural strength for the battery module, and the tray cannot provide a sufficient weight capacity.

However, in this application, the length L of the cell ranges from 600 to 1500 mm, two ends of the cell 100 are supported by the first edge beam 201 and the second edge beam 202, so that the weight of the cell is distributed to edge beams of the tray on two sides. While the cross beams are removed, the weight capacity of the tray is effectively improved. In addition, the cell 100 has specific rigidity itself and can reinforce the battery pack 200.

The first edge beam 201 and the second edge beam 202 respectively include inner wall surfaces matching both end surfaces of the cell 100. An insulation plate is sandwiched between the inner wall surface of the first edge beam 201 and the first end of the cell 100, that is, the insulation plate is located between the cell 100 and the inner wall surface of the first edge beam 201. An insulation plate is sandwiched between the inner wall surface of the second edge beam 202 and the second end of the cell 100, that is, the insulation plate is located between the cell 100 and the inner wall surface of the second edge beam 202. Specifically, a specific structure of the insulation plate is not limited provided that the insulation plate can produce effects of fixing the cell array 3, reinforcing, and swelling preventing. In some implementations, the insulation plates may be the first end plate 207 and the second end plate 208 mentioned below.

The tray includes a bottom plate. The first edge beam 201 and the second edge beam 202 are disposed opposite to each other on two ends of the bottom plate along the direction Y The cell 100 and the bottom plate are spaced apart from each other. In this way, a weight of the cell 100 borne by the bottom plate can be reduced, and the weight of the cell 100 may be mostly borne by the first edge beam and the second edge beam. A requirement for a weight capacity of the bottom plate is reduced, so that complexity of a manufacturing process of the bottom plate is reduced, and production costs are lowered.

A heat preservation layer 217 may be disposed between the bottom of the cell array 3 and the bottom plate of the tray, to insulate heat transfer between the cell 100 and the outside to achieve heat preservation of the cell 100, and prevent thermal interference between an external environment of the battery pack 200 and the cell 100 inside the battery pack 200. The heat preservation layer 217 may be made of a material with thermal insulation and heat preservation functions, for example, be made of heat insulation foam.

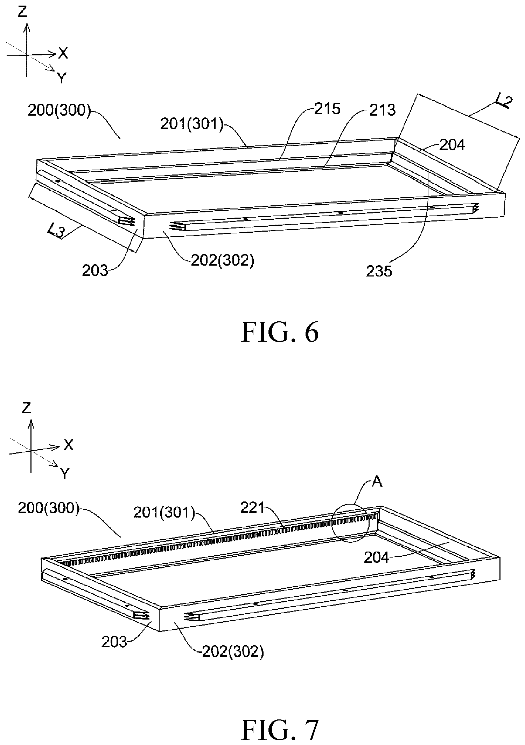

In addition, to enable the first edge beam 201 and the second edge beam 202 to provide a supporting force for the cell 100, in an implementation provided in this application, as shown in FIG. 5 and FIG. 6, a first support plate 213 is disposed on the first edge beam 201, and a second support plate 214 is disposed on the second edge beam 202. A first support surface is provided on a surface of the first support plate 213 facing toward the sealing cover 220, and a second support surface is provided on the surface of the second support plate 214 facing toward sealing cover 220. A first end of each cell 100 is supported by the first support surface of the first support plate 213, and a second end of each cell 100 is supported by the second support surface of the second support plate 214. A first mounting surface is provided on a surface of the first support plate 213 facing away from the sealing cover 220, and a second mounting surface is provided on the surface of the second support plate 214 facing away from the sealing cover 220. The bottom plate of the tray is mounted on the first mounting surface and the second mounting surface. The first support plate 213 may inwardly protrude from the bottom of the first edge beam 201, and the second support plate 214 may inwardly protrude from the bottom of the second edge beam 202.

Compared with the technical solution in which the cell 100 is supported by a bottom plate in the battery pack in the related art, in this application, the cell 100 is supported by the first support plate 213 and the second support plate 214 disposed on the first edge beam 201 and the second edge beam 202, which may simplify the structure of the battery pack 200 provided in this application, and reduce the weight of the battery pack 200. Insulation plates may be disposed on the first support plate 213 and the second support plate 214, and the insulation plates are located between the cell 100 and the first support plate 213, and between the cell 100 and the second support plate 214.

The first edge beam 201 and the second edge beam 202 are connected to the bottom plate in a manner that is not particularly limited, and may be integrally formed with or welded to the bottom plate.

The first edge beam 201 includes a first connection surface 215 on an inner wall surface of the first edge beam 201 facing toward the cell 100, and a distance from the first connection surface 215 to the sealing cover 220 is less than a distance from the first support surface to the sealing cover 220. The second edge beam 202 includes a second connection surface on an inner wall surface of the second edge beam 202 facing toward the cell 100, and a distance from the second connection surface 216 to the sealing cover 220 is less than a distance from the second support surface to the sealing cover 220. Two ends of the cell 100 are respectively in contact with the first connection surface and the second connection surface.

In some embodiments, the first connection surface 215 is further provided on the first edge beam 201, and second connection surface 216 is further provided on the second edge beam 202. The first end of each cell 100 is fixed on the first connection surface 215, and the second end of each cell 100 is fixed on the second connection surface 216. Optionally, the first connection surface 215 may be a third support plate disposed on the first edge beam 201, and the third support plate is located above the first support plate 213. The second connection surface 216 may be a fourth support plate provided on the second edge beam 202, and the fourth support plate is located above the second support plate 214. The first end and the second end of the cell may be fixed to the first connection surface 215 and the second connection surface 216 through fasteners, or welded to the first connection surface 215 and the second connection surface 216.

The first edge beam 201 includes a structure including at least two steps on the inner wall surface of the first edge beam 201 facing toward the cell 100, where surfaces of the two steps facing toward the sealing cover 220 respectively form the first connection surface 215 and the first support surface. The second edge beam 202 includes a structure including at least two steps on the inner wall surface of the second edge beam 202 facing toward the cell 100, where surfaces of the two steps facing toward the sealing cover 220 respectively form the second connection surface 216 and the second support surface.

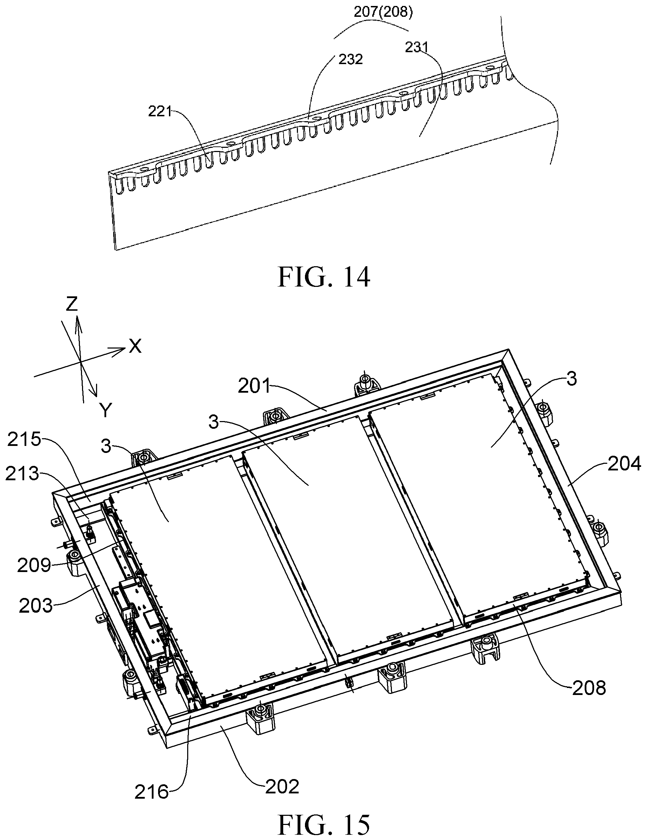

According to the battery pack provided in this application, in at least some of a plurality of cells 100, as shown in FIG. 12 and FIG. 14, a first end plate 207 is disposed on an end, facing toward the first edge beam 201, of a cell 100 adjacent to the first edge beam 201. In at least some of a plurality of cells 100, a second end plate 208 is disposed on an end, facing toward the second edge beam 202, of a cell 100 adjacent to the second edge beam 202. A first end of at least one cell 100 is connected to the first connection surface 215 by the first end plate 207, and a second end of at least one cell 100 is connected to the second connection surface 216 by the second end plate 208. That is, at least one cell is supported by the first edge beam 201 through the first end plate, and at least one cell 100 is supported by the second edge beam 202 through the second end plate 208. The first end plate 207, the second end plate 208, and at least some of a plurality of cells 100 form a battery module. There may be one first end plate 207 and one second end plate 208. The first end plate 207, the second end plate 208, and a plurality of cells 100 form a battery module. The battery module is supported between the first edge beam 201 and the second edge beam 202 by the first end plate 207 and the second end plate 208. There may be a plurality of first end plates 207 and a plurality of second end plates 208. The plurality of first end plates 207, the plurality of second end plates 208, and a plurality of cells 100 form a plurality of battery modules. Each battery module is supported between the first edge beam 201 and the second edge beam 202 by the first end plate 207 and the second end plate 208. Each battery module extends between the first edge beam 201 and the second edge beam 202, and the plurality of battery modules are arranged along a length direction of the first edge beam 201 and the second edge beam 202. The quantity of the first end plates 207 and second end plates 208, that is, the quantity of the battery modules, is not limited in this application.

In some embodiments, the first end plate 207 includes an end plate body 231 disposed opposite to an end surface of a cell 100 and a first connection plate 232 connected to the end plate body 231 and protruding toward the first edge beam 201. The second end plate 208 includes an end plate body 231 disposed opposite to an end surface of a cell 100 and a first connection plate 232 connected to the end plate body 231 and protruding toward the second edge beam 202. The first connection plate 232 of the first end plate 207 is connected to the first connection surface 215, and the first connection plate 232 of the second end plate 208 is connected to the second connection surface 216. A specific connection form is not limited.

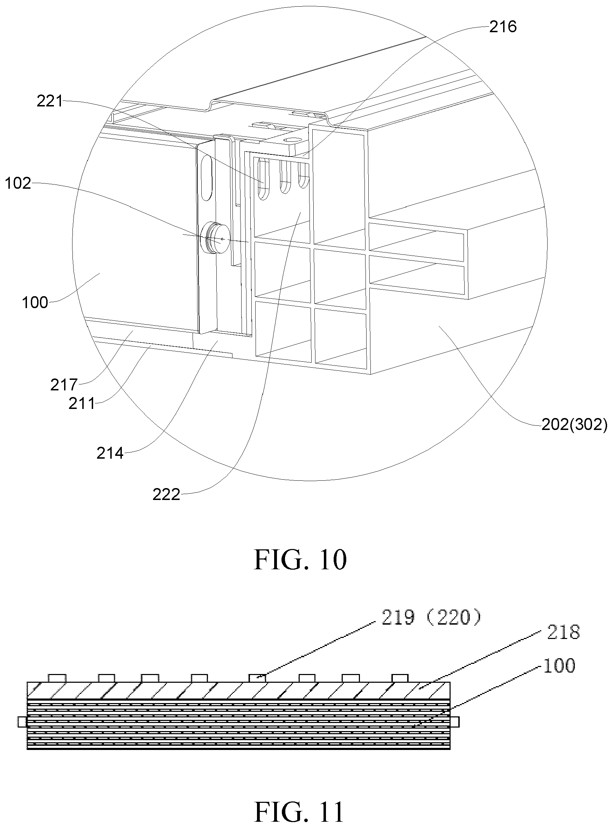

In an implementation, as shown in FIG. 2 and FIG. 10, an anti-explosion valve 103 is disposed on a first end of a cell 100 facing toward the first edge beam 201, an exhaust passage 222 is provided inside the first edge beam 201, the first edge beam 201 is provided with an exhaust hole 221 at a position corresponding to the anti-explosion valve 103, the exhaust hole 221 is in communication with the exhaust passage 222, and the battery pack 200 is provided with an exhaust opening in communication with the exhaust passage 222. An anti-explosion valve 103 is disposed on a second end of a cell 100 facing toward the second edge beam 202, an exhaust passage 222 is provided inside the second edge beam 202, the second edge beam 202 is provided with an exhaust hole 221 at a position corresponding to the anti-explosion valve 103, the exhaust hole 221 is in communication with the exhaust passage 222, and the battery pack 200 is provided with an exhaust opening in communication with the exhaust passage 222. In another implementation, as shown in FIG. 12 and FIG. 14, the exhaust hole 221 may alternatively be formed in the first end plate 207 and the first edge beam 201, and/or in the second end plate 208 and the second edge beam 202.

In the related art, during use of the cell, if the air pressure inside the cell increases to a specific degree, the anti-explosion valve is opened. Flame, smoke, or gas inside the cell is exhausted through the anti-explosion valve. The flame, smoke, or gas gathers inside the battery pack and causes secondary damage to the cell if not exhausted in time. However, in this application, because the air intake 221 corresponding to the anti-explosion valve 103 of each cell 100 is provided on the first edge beam 201 and/or the second edge beam 202, and the exhaust passage 222 is provided inside the first edge beam 201 and/or the second edge beam 202, when the air pressure inside the cell 100 increases, the anti-explosion valve 103 of the cell is opened. Flame, smoke, or gas inside the cell directly enters the exhaust passage 222 in the first edge beam 201 and/or the second edge beam 202 through the air intake 221, and is exhausted out of the first edge beam 201 and/or the second edge beam 202 through the exhaust hole, for example, into the atmosphere through the exhaust hole. In this way, the flame, smoke, or gas does not gather inside the battery pack 200, to prevent the flame, smoke, or gas from causing secondary damage to the cell 100.

In some embodiments, a management accommodating cavity for accommodating a battery management component and a power distribution component is defined between the first connection surface 215 and the second connection surface 216 and the sealing cover 220. Therefore, space occupied by the battery management component and the power distribution component can be reduced, so that more cells can be disposed in the battery pack, thereby improving the space utilization, volume energy density, and the battery life.

For the bottom plate of the tray, the cell 100 and the bottom plate of the tray are spaced apart from each other. Therefore, the bottom plate of the tray is not stressed, so that a manufacturing process of the bottom plate of the tray can be simplified, and manufacturing costs can be reduced. A heat preservation layer is disposed between the cell 100 and the bottom plate of the tray, to insulate heat transfer between the cell 100 and the outside to achieve heat preservation of the cell 100, and prevent thermal interference between an external environment of the battery pack 200 and the cell 100 inside the battery pack 200. The heat preservation layer may be made of a material with thermal insulation and heat preservation functions, for example, be made of heat insulation foam.

In addition, in an implementation provided in this application, as shown in FIG. 3 to FIG. 8, the battery pack 200 may further include a third edge beam 203 and a fourth edge beam 204 disposed opposite to each other along the direction X. The plurality of cells 100 are arranged between the third edge beam 203 and the fourth edge beam 204 along the direction X. In an implementation, the first edge beam 201 and the second edge beam 202 are perpendicular to and connected to the third edge beam 203 and the fourth edge beam 204, so that the battery pack 200 is formed as a rectangle or a square. In another implementation, the first edge beam 201 and the second edge beam 202 may be parallel to each other, and the third edge beam 203 and the fourth edge beam 204 may be disposed at an angle with the first edge beam 201 and the second edge beam 202, so that the battery pack 200 is formed as a trapezoid, a parallelogram, or the like. A specific shape of the battery pack 200 formed of the first edge beam 201, the second edge beam 202, the third edge beam 203, and the fourth edge beam 204 is not limited in this application.

In some embodiments, as shown in FIG. 2, the third edge beam 203 and the fourth edge beam 204 are configured to provide pressing forces for the cell array 3, the third edge beam 203 applies a force, facing toward the fourth edge beam 204, to cells 100 disposed adjacent to the third edge beam 203, and the fourth edge beam 204 applies a force, facing toward the third edge beam 203, to cells 100 disposed adjacent to the fourth edge beam 204, so that a plurality of cells 100 can be closely arranged between the third edge beam 203 and the fourth edge beam 204 along the direction X, and the plurality of cells 100 can fit each other. In addition, the third edge beam 203 and the fourth edge beam 204 may limit the plurality of cells 100 in the direction X, and in particular, when the cells 100 slightly swell, buffer and provide inward pressure to the cells 100, to prevent the cells 100 from swelling and deforming excessively. In particular, when an anti-explosion valve 103 and a CID are disposed on the cell 100, the third edge beam 203 and the fourth edge beam 204 can effectively limit the swelling of the cell 100, so that when the cell 100 has a fault and swells, there is sufficient air pressure inside the cell to break through the anti-explosion valve 103 or a flip sheet in the CID, thereby short-circuiting the cell 100, ensuring safety of the cell 100, and preventing the cell 100 from exploding.

As shown in FIG. 12 and FIG. 13, a first elastic buffer device 205 may be disposed between the third edge beam 203 and the cells 100 adjacent to the third edge beam 203, and/or a second elastic device 206 may be disposed between the fourth edge beam 204 and the cells 100 adjacent to the fourth edge beam 204. The first elastic buffer device 205 may be mounted on the third edge beam 203, and the second elastic device 206 may be mounted on the fourth edge beam 204. A plurality of cells 100 are closely arranged through the first elastic buffer device 205 and the second elastic device 206. In this way, a quantity of the cells 100 arranged between the third edge beam 203 and the fourth edge beam 204 may be adjusted by changing a mounting distance between the first elastic buffer device 205 and the third edge beam 203 and a mounting distance between the second elastic device 206 the fourth edge beam 204 without changing a spacing between the third edge beam 203 and the fourth edge beam 204.

In some embodiments, a third connection surface 236 is further provided on the third edge beam 203, and a fourth connection surface 235 is further provided on the fourth edge beam 204. A first side of each cell 100 is fixed on the third connection surface 236, and a second side of each cell 100 is fixed on the fourth connection surface 235.

In at least some of a plurality of cells 100, as shown in FIG. 12 and FIG. 13, a first side plate 209 is disposed on an end, facing toward the third edge beam 203, of a cell 100 adjacent to the third edge beam 203. In at least some of a plurality of cells 100, a second side plate 210 is disposed on an end, facing toward the fourth edge beam 204, of a cell 100 adjacent to the fourth edge beam 204.

A first side of at least one cell 100 is connected to the third connection surface 236 by the first side plate 209, and a second side of at least one cell 100 is connected to the fourth connection surface 235 by the second side plate 210. That is, at least one cell is supported by the fourth edge beam 209 through the first side plate, and at least one cell 100 is supported by the fourth edge beam 204 through the second side plate 210. The first side plate 209, the second side plate 210, and at least some of a plurality of cells 100 form a battery module. There may be one first side plate 209 and one second side plate 210. The first side plate 209, the second side plate 210, and a plurality of cells 100 form a battery module. The battery module is supported between the third edge beam 203 and the fourth edge beam 204 through the first side plate 209 and the second side plate 210. There may be a plurality of first side plates 209 and a plurality of second side plates 210. The plurality of first side plates 209, the plurality of second side plates 210, and a plurality of cells 100 form a plurality of battery modules. Each battery module is supported between the third edge beam 203 and the fourth edge beam 204 by the first side plate 209 and the second side plate 210. All the battery modules are arranged between the third edge beam 203 and the fourth edge beam 204. The quantity of the first side plates 209 and second side plates 210, that is, the quantity of the battery modules, is not limited in this application.

In some embodiments, the first side plate 209 includes a side plate body 234 disposed opposite to an end surface of a cell 100 and a second connection plate 233 connected to the side plate body 234 and protruding toward the third edge beam 203. The second side plate 210 includes a side plate body 234 disposed opposite to an end surface of a cell 100 and a second connection plate 234 connected to the side plate body 234 and protruding toward the fourth edge beam 204. The second connection plate 234 corresponding to the first side plate 209 is connected to the third connection surface 236, and the second connection plate 234 corresponding to the second side plate 210 is connected to the fourth connection surface 235. A specific connection form is not limited.

In some embodiments, at least some cells 100 are supported by the first edge beam 201 and the second edge beam 202 through a second panel 211. The second panel 211 and the at least some cells 100 form a battery module. In other words, the second panel 211 is disposed below at least some of a plurality of cells 100. Each cell 100 is supported by the first edge beam 201 and the second edge beam 202 through the second panel 211. The second panel 211 and the at least one some of the plurality of cells 100 form the battery module. In the implementation, the plurality of cells 100 are supported by the first edge beam 201 and the second edge beam 202 through the second panel 211, thereby simplifying a structure of the battery module and helping to achieve a light weight of the battery pack.

The first end plate 207 and the second end plate 208, or the second panel 211 may be supported by the first edge beam 201 and the second edge beam 202 through various implementations, which are not limited in this application, for example, be detachably fastened on the first edge beam 201 and the second edge beam 202 through a fastener, or be fixed on the first edge beam 201 and the second edge beam 202 through welding, or be connected to the first edge beam 201 and the second edge beam 202 through adhesive dispensing, or be directly placed on the first edge beam 201 and the second edge beam 202 and supported by the first edge beam 201 and the second edge beam 202.

In an implementation, the battery pack 200 includes: a first panel 212 and a second panel 211, where upper surfaces and lower surfaces of at least some cells 100 are respectively connected to the first panel 212 and the second panel 211; a first end plate 207 and a second end plate 208, where two end surfaces of at least some cells 100 are respectively connected to the first end plate 207 and the second end plate 208; and a first side plate 209 and a second side plate 210, where the first side plate 209 and the second side plate 210 are respectively disposed on outer side surfaces of two outermost cells 100. The first end plate 207, the second end plate 208, the first side plate 209, and the second side plate 210 are all connected to the two, namely, the first panel 212 and the second panel 211. The first edge beam 201 includes a first support surface and a first connection surface 215 on an inner wall surface of the first edge beam 201 facing toward the cell 100. In addition, the second edge beam 202 includes a second support surface and a second connection surface 216 on an inner wall surface of the second edge beam 202 facing toward the cell 100. A first end of the cell 100 is supported by the first support surface, a second end of the cell 100 is supported by the second support surface, the first end plate 207 is connected to the first connection surface 215, and the second end plate 208 is connected to the second connection surface 216. The third edge beam 203 includes a third connection surface 236 on an inner wall surface of the third edge beam 203 facing toward the cell 100, and the fourth edge beam includes a fourth connection surface 235 on an inner wall surface of the fourth edge beam facing toward the cell. The first side plate 209 is connected to the third connection surface 236, and the second side plate 210 is connected to the fourth connection surface 235.

Through the foregoing implementations, the first end plate 207, the second end plate 208, the first side plate 209, the second side plate 210, the first panel 212, the second panel 211 jointly define a sealed accommodating space for accommodating a plurality of cells 100. In this way, when there is a failure in a cell 100, causing a fire and an explosion, the first end plate 207, the second end plate 208, the first side plate 209, the second side plate 210, the first panel 212, and the second panel 211 may control the failure of the cell 100 within a specific range to prevent the explosion of the cell 100 from affecting surrounding components. The first side plate 209 may be the first elastic buffer device 205 mentioned above, and the second side plate 210 may be the second elastic device 206 mentioned above, so that the first side plate 209 and the second side plate 210 have a function of restricting swelling and deformation of a plurality of cells 100, thereby ensuring starting of an anti-explosion valve 103 and/or a CID.

In an embodiment in which a battery module includes a first panel 212, as shown in FIG. 11, a heat conducting plate 218 may be disposed between the first panel 212 and the cell 100 to facilitate heat dissipation of the cell 100 and avoid an excessively large temperature difference between a plurality of cells 100. The heat conducting plate 218 may be made of a material with good thermal conductivity. For example, the heat conducting plate 218 may be made of copper or aluminum with high thermal conductivity.

In some embodiments, when the battery pack is used as a battery pack used in a vehicle for providing electric energy, the length direction of the cell 100 may be used as a width direction of the vehicle, that is, a left-right direction of the vehicle, in an optional implementation.

In another implementation provided in this application, the support member 4 is a plurality of bottom beams, and the bottom beams are located below the cell array 3. The bottom beams are configured to support the cell array 3, and upper surfaces of the bottom beams may be a plane to form a face-to-face support for the cell array 3. The bottom beam has a rectangular cross section. There may be a plurality of bottom beams, and the plurality of bottom beams may be disposed in parallel and spaced apart from each other or disposed in an intersecting manner. The cell array 3 may be fixed to the bottom beams in a manner such as adhesive bonding or a threaded connector. The battery pack further includes a sealing cover, and the sealing cover and the bottom beams form an accommodating cavity for accommodating the cell array 3. The sealing cover is configured to prevent intrusion of dust, water, and the like.

As shown in FIG. 25, the bottom beams include a first beam 501 and a second beam 502 located on the first beam 501 and intersecting the first beam 501, an angle between an extending direction of the first beam 501 and the direction Y ranges from 60 to 90 degrees, and the cell 100 is supported by the first beam 501. In an embodiment shown in FIG. 25, the first beam 501 and the second beam 502 are perpendicularly connected, and a connection manner between the first beam 501 and the second beam 502 includes, but is not limited to, connection of a threaded connector, welding, and the like. The first beam 501 and the second beam 502 may both be linear beams.

Two second beams 502 are included. The two second beams 502 are respectively located on two ends of the first beam 501 and are separately perpendicular to the first beam 501, and the cell 100 is supported by the first beam 501. The second beam 502 protrudes upward (direction Z) relative to the first beam 501. For example, a lower surface of the second beam 502 may be connected to an upper surface of the first beam 501. When the cells 100 are arranged, two outermost cells 100 can be respectively abutted against by side surfaces of two second beams 502 facing toward each other. A center of the cell 100 is located on the first beam 501, a length direction of the cell 100 is perpendicular to a length direction of the first beam 501, and the center of the cell 100 is aligned with the first beam 501, so that a single beam can support the cell 100. In another embodiment, there may be a plurality of first beams 501. The plurality of first beams 501 are disposed in parallel and spaced apart from each other along a second direction.

In another implementation, the bottom beams may alternatively be a plurality of rectangular beams disposed in parallel and spaced apart from each other. An angle between an extending direction of the rectangular beam and the direction Y ranges from 60 to 90 degrees, and the cell 100 is supported by the rectangular beam. The rectangular beams are evenly distributed along the direction Y, the extending direction of the rectangular beam is perpendicular to the direction Y, and the cells 100 are evenly distributed on the rectangular beams.

The shape of the bottom beam includes, but is not limited to, a straight line and a rectangle, and may alternatively be a triangle, a trapezoid, or another special shape.

In another implementation provided in this application, as shown in FIG. 16, the support member 4 is a vehicle chassis, the cell array 3 is located on the vehicle chassis, and the battery pack 200 may be directly formed on an electric vehicle. In other words, the battery pack 200 is a device formed at any appropriate position on the electric vehicle and used for mounting the cell 100. For example, the battery pack 200 may be formed on the chassis of the electric vehicle.

In some embodiments, a cavity 300 that depresses downward is provided on the vehicle chassis, to help assembly of the cell 100.

In a specific implementation provided in this application, the cavity 300 may include a first side wall 301 and a second side wall 302 disposed opposite to each other. The first side wall 301 may extend downward from the chassis of the electric vehicle to obtain an extending portion of the first side wall 301. The first side wall 302 may extend downward from the chassis of the electric vehicle to obtain an extending portion of the second side wall 302. In this way, in an implementation, the first end of the cell 100 may be supported by the extending portion of the first side wall 301, and the second end of the cell 100 may be supported by the extending portion of the second side wall 302. That is, this application further provides an electric vehicle in which the cells 100 can be arranged according to the foregoing technical solution, and a cavity 300 that has the same characteristic as the separate vehicle-use tray is formed on the electric vehicle, thereby forming the battery pack 200 provided in this application.

In some embodiments, in an exemplary implementation provided in this application, the extending portion of the first side wall 301 and the extending portion of the second side wall 302 form the bottom 305 of the cavity 300. In an implementation, the extending portion of the first side wall 301 is connected to the extending portion of the second side wall 302, so that the cavity 300 is formed as a cavity 300 including a U-shaped groove that depresses downward. The cell 100 may be supported by the bottom 305 of the cavity 300. In another implementation, the extending portion of the first side wall 301 may be alternatively spaced apart from the extending portion of the second side wall 302 by a specific distance.

According to the battery pack 200 provided in this application, as shown in FIG. 2, a battery placement area is defined in the battery pack 200, a cell array 3 is located in the battery placement area, and the battery pack 200 includes a cell array 3.

That is, no reinforcing rib needs to be disposed in the battery pack, and connected cells 100 directly assume the role of a reinforcing rib, so that a structure of the battery pack 200 is greatly simplified, and space occupied by the reinforcing rib and space occupied by a mounting structure of the cells 100 are reduced, thereby increasing the space utilization, to improve the battery life.

In some specific examples of this application, the battery pack accommodates only one cell 100 in the direction Y That is, in the battery pack 200, a quantity of cells 100 disposed in the direction Y cannot be two or more. Only one cell 100 can be accommodated, indicating that only one cell 100 can be disposed side by side in the direction Y of the battery pack 200. As shown in FIG. 2 and FIG. 4 to FIG. 6, the cell 100 is perpendicular to the first edge beam 201 and the second edge beam 202, a distance between a first end and a second end of the cell 100 is LI, and a distance between an inner surface of the first edge beam 201 and an inner surface of the second edge beam 202 is L2. A ratio of L1 to L2 satisfies L1/L2≥50%. In other words, along the direction Y, only one cell 100 is disposed between the first edge beam 201 and the second edge beam 202. In the direction Y, a relationship between distances between the cell 100 and two edge beams is set such that the cell 100 may be used as a cross beam or a longitudinal beam. In an exemplary implementation provided in this application, only one cell 100 is disposed between the first edge beam 201 and the second edge beam 202 along the direction Y, so that the cell 100 may be used as a cross beam or a longitudinal beam for reinforcing structural strength of the battery pack 200.

In some embodiments, the ratio of L1 to L2 may satisfy 80%≤L1/L2≤97%, so that the first end and the second end of the cell 100 are as close to the first edge beam 201 and the second edge beam 202 as possible, and even abut against the first edge beam 201 and the second edge beam 202, to facilitate dispersion and conduction of a force through the structure of the cell 100, thereby ensuring that the cell 100 may be used as a cross beam or a longitudinal beam for reinforcing the structural strength of the battery pack 200, and ensuring that the battery pack 200 has sufficient strength to resist deformation caused by an external force.

The embodiments of this application are not limited to that no reinforcing rib is disposed. Therefore, there may be a plurality of cell arrays 3.

According to the battery pack 200 provided in this application, a battery placement area is defined in the battery pack 200, the cell array 3 is located in the battery placement area, N cell arrays 3 are disposed in the battery placement area along the direction X, M cell arrays 3 are disposed in the battery placement area along the direction Y, the cell arrays 3 are electrically connected to each other by a connector between electrode terminals of the cells, N is greater than 1, and M is greater than 1. An electrode terminal of the last cell of the (N―1)^{th} cell array 3 is connected to an electrode terminal of the first cell of the N^{th} cell array 3 by the connector, and N is greater than 1. In other words, a plurality of cell arrays 3 may be disposed along an arrangement direction of the cells 100 in the battery pack, that is, a plurality of columns of cell arrays 3 are disposed in the battery pack 200.

Specifically, as shown in FIG. 21, a first separator 700 divides the shown cell array 3 along the direction X of the battery pack 200 into two cell arrays 3. The last cell 100 of a previous cell array 3 is connected to the first cell of a next cell array 3 by the connector.

According to the battery pack 200 provided in this application, a battery placement area is defined in the battery pack, the cell array 3 is located in the battery placement area, M cell arrays 3 are disposed in the battery placement area along the direction Y, the cell arrays 3 are electrically connected to each other by a connector between electrode terminals of the cells, and M is greater than 1. An electrode terminal of the last cell of the (M―1)^{th} cell array 3 is connected to an electrode terminal of the first cell of the M^{th} cell array 3 by the connector, and M is greater than 1. In other words, a plurality of cells 100 may be accommodated along the extending direction of the cell 100, that is, a plurality of rows of cell arrays 3 are disposed in the battery pack 200.

Specifically, as shown in FIG. 20, a second separator 800 divides the cell array 3 along the direction Y of the battery pack 200 into two cell arrays 3. The last cell 100 of a previous cell array 3 is connected to the first cell of a next cell array 3 by the connector.

According to the battery pack 200 provided in this application, a battery placement area is defined in the battery pack, the cell array 3 is located in the battery placement area, N cell arrays 3 are disposed in the battery placement area along the direction X, M cell arrays 3 are disposed in the battery placement area along the direction Y, the cell arrays 3 are electrically connected to each other by a connector between electrode terminals of the cells, N is greater than 1, and M is greater than 1. In other words, the battery placement area is divided into a plurality of battery placement sub-regions in the direction X of the battery pack, and a plurality of cells 100 may be accommodated along the extending direction Y of the cell 100, that is, a plurality of rows and columns of cell arrays 3 are disposed in the battery pack 200.

Specifically, as shown in FIG. 22, the first separator 700 and the second separator 800 are disposed in the battery pack 200, and the first separator 700 and the second separator 800 divide the plurality of cells into two rows and two columns of cell arrays 3. Any two cell arrays 3 are connected to each other by a connector between electrode terminals.

In the foregoing description, the first separator 700 and the second separator 800 may be reinforcing ribs or other structural members such as heat insulation foam, which is not limited in this application.

In this application, a quantity of cells 100 in the cell array 3 is not particularly limited. Different quantities of cells 100 may be disposed according to vehicle models and different required powers. In some specific examples of this application, a quantity of cells in the cell array 3 ranges from 60 to 200. In some other specific examples of this application, a quantity of cells in the cell array 3 ranges from 80 to 150.

In the battery pack 200 provided in this application, cells in the cell array 3 are bonded by an adhesive. Cells 100 are bonded to each other by an adhesive, so that space can be saved, another structural member can be omitted, a light weight can be achieved, energy density can be increased, production efficiency can be improved, and so on.

In an implementation, the first panel 212 is a heat exchange plate 219 with a cooling structure disposed inside. Cooling liquid is disposed inside the heat exchange plate 219, so that a temperature of the cell 100 is reduced through the cooling liquid, thereby maintaining the cell 100 at an appropriate operating temperature. Because the heat conducting plate 218 is disposed for the heat exchange plate 219 and the cell 100, when the cell 100 is cooled through the cooling liquid, temperature differences at positions of the heat exchange plate 219 may be balanced through the heat conducting plate 218, thereby controlling temperature differences between the plurality of cells 100 within 1°C.

The cell 100 may have any appropriate structure and shape. In an implementation provided in this application, as shown in FIG. 3, the cell 100 is a square battery of which a battery body is a square structure, and specifically has a length, a thickness, and a height between the length and the thickness. Each cell 100 is placed sideways. For each cell 100, a length direction of the battery body is the direction Y, a thickness direction is the direction X, and a height direction is the direction Z. Two adjacent cells 100 are arranged with large surfaces thereof facing toward each other. In other words, the square has a length L in the length direction, a thickness D in a thickness direction perpendicular to the length direction, and a height H in a height direction. The height H is between the length L and the thickness D. Specifically, the cell 100 has a large surface, a narrow surface, and an end surface. A long side of the large surface has the foregoing length L, and a short side thereof has the foregoing height H. A long side of the narrow surface has the foregoing length L, and the short side thereof has the foregoing thickness D. A long side of the end face has the foregoing height H, and a short side thereof has the foregoing thickness D. That the cell 100 is placed sideways means that two end surfaces of the cell 100 face toward the first edge beam 201 and the second edge beam 202 respectively, and large surfaces of two adjacent cells 100 face toward each other, so that the cell 100 may replace a cross beam to achieve a better effect and higher strength. In another implementation, the cell 100 may alternatively be cylindrical.

In the related art, how to design a shape and sizes of the cell 100 to enable the cell to have both an appropriate battery capacity and a good heat dissipation effect is always one of problems to be resolved in the field of battery technologies

In an implementation provided in this application, a ratio of the length L to the thickness D of the battery body of the cell 100 satisfies 23≤L/D≤208. At this ratio, a longer and thinner cell 100 can be obtained. In this way, an appropriate resistance value, a relatively large heat dissipation area, and relatively high heat dissipation efficiency can be maintained while ensuring that the length of the cell 100 extends in the direction Y, leading to good adaptivity to various vehicle models.

In another implementation provided in this application, a ratio of the length L to the height H of the battery body of the cell 100 satisfies 4≤L/H≤21, for example, 9≤L/H≤13. The ratio may be achieved through the foregoing longer and thinner cell 100 or through size adjustment. By controlling the ratio of the length L to the volume V of the battery body of the cell 100, it may be ensured that the cell 100 has a sufficient heat dissipation area while the length of the cell 100 extends along the direction Y, to ensure the heat dissipation effect of the cell 100.

In the related art, a size L of a cell is relatively short, and two ends of the cell cannot be directly supported by edge beams, and an assembly process thereof is that a plurality of cells need to be first arranged to form a cell array 3, and an end plate and/or a side plate are or is disposed outside the cell array 3, where generally, the end plate and the side plate are both included, and the end plate and the side plate are fixed to enclose a space for accommodating the cell array 3, that is, form a battery module; then, the battery module is mounted in the pack, and in the battery pack, a cross beam and/or a longitudinal beam also need to be disposed to cooperate with mounting of the battery module, where procedures and assembly are relatively complex. A probability of a defective rate is increased during assembly of the power battery pack. A plurality of assembly procedures increase a possibility that the battery pack becomes loose and is not mounted firmly, resulting in adverse impact on quality of the battery pack and degradation of stability and reliability of the battery pack.

Compared with the related art, in this application, because the size L of the cell is relatively large, when the cells are assembled into a battery pack, a single cell 100 can be directly placed sideways into the tray, a first end of the cell 100 is supported by a first edge beam 201, the other end of the cell 100 is supported by a second edge beam 200, then, other cells 100 are placed in sequence along a direction X of the battery pack to form a cell array 3, and then, a fastener is used to fix the cell array 3 and mount a battery management component and a power distribution component. The whole assembly is relatively simple, and it is unnecessary to first assemble a battery module, and then, mount the battery module into a battery pack, and a cell array 3 can be directly formed in the battery pack, so that labor costs, material resource costs, and the like are reduced, and in addition, a defective rate is also reduced, and stability and reliability of the battery pack are improved.

In this application, alternatively, cells may first be assembled into a cell array 3, and then, the cell array 3 is mounted in the battery pack. Such an implementation also falls within the protection scope of this application.

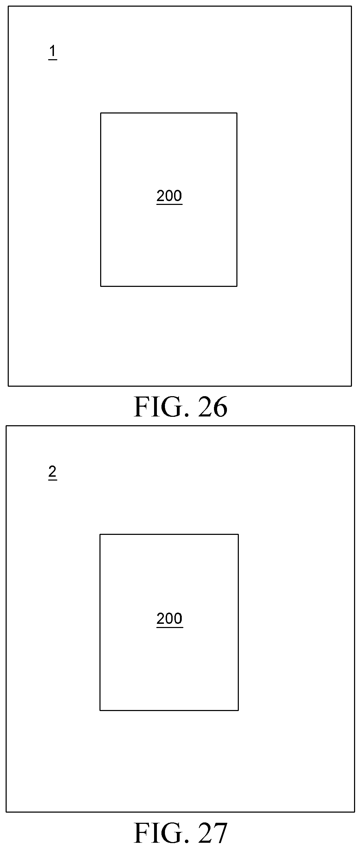

As shown in FIG. 26, the second objective of this application is to provide a vehicle 1, including the foregoing battery pack 200.

The vehicle 1 herein may include electric vehicles that need a battery pack to provide electric energy for driving the electric vehicles to travel, for example, a commercial vehicle, a special vehicle, an electric bicycle, an electric motorcycle, and an electric scooter.

In some embodiments, the battery pack 200 is disposed at a bottom of the electric vehicle, and a support member 4 is fixedly connected to a chassis of the vehicle 1. Because the chassis of the electric vehicle has relatively large mounting space, a quantity of cells 100 can be increased as much as possible by disposing the battery pack 200 on the chassis of the electric vehicle, thereby improving the battery life of the electric vehicle.

In some embodiments, the vehicle includes a battery pack disposed at the bottom of the vehicle, the battery pack is fixedly connected to a chassis of the vehicle. A direction Q, a length direction of a smallest rectangle enclosing a cell, or a direction Y is a width direction of a vehicle body of the vehicle, that is, a left-right direction of the vehicle. A direction P, a width direction of the smallest rectangle enclosing the cell, or a direction X is a length direction of the vehicle body of the vehicle, that is, a front-rear direction of the vehicle. In another implementation, the vehicle may include a plurality of battery packs disposed at the bottom of the vehicle. The plurality of battery packs may have the same shape and sizes or different shapes and sizes. Specifically, each battery pack may be adjusted according to a shape and sizes of the chassis of the vehicle, and the plurality of battery packs are arranged along the length direction of the vehicle body, that is, the front-rear direction.

In some embodiments, in an implementation provided in this application, a ratio of a width L3 of the battery pack 200 in the direction Q, or along the length direction of the smallest rectangle enclosing the cell, or along the direction Y to a width W of the vehicle body satisfies: 50%≤L3/W≤80%, which in this implementation, may be achieved by disposing only one battery pack 200 along the width direction of the vehicle body. When there are a plurality of battery packs 200, the plurality of battery packs 200 are arranged along the length direction of the vehicle body. Generally, for most vehicles, a width of a vehicle body is 600 mm to 2000 mm, for example, 600 mm, 1600 mm, 1800 mm, 2000 mm, a length of the vehicle body is 500 mm 5000 mm. For a passenger vehicle, a width of the passenger vehicle is usually 600 mm to 1800 mm, and a length of the vehicle body is 600 mm to 4000 mm.

In some embodiments, a ratio of a size L' of the cell 100 along the direction Q, or along the length direction of the smallest rectangle enclosing the cell, or along the direction Y to a width W of the vehicle body satisfies 46%≤L'/W≤76%. In consideration of thicknesses of a first edge beam 201 and a second edge beam 202 of the battery pack 200, when the ratio of the size L' of the cell 100 in the direction Y to the width W of the vehicle body satisfies 46%≤L'/W≤76%, in this implementation, the ratio may be achieved by disposing only one cell 100 along the width direction of the vehicle body. In another possible implementation, in a case that such size requirements are satisfied, the ratio may be achieved by disposing a plurality of battery modules or a plurality of cells in the length direction. In an implementation, a size of the cell 100 in the direction Y is 600 mm to 1500 mm.

It should be noted that, in some embodiments of this application, although a solution in which two ends of a cell are respectively supported on the first edge beam and the second edge beam through fitting is disclosed, in an actual production process, it is possible that a cell with a length size matching the width of the vehicle body cannot be manufactured. In other words, the cell cannot be processed to have a desired length due to some reasons. This is because the electric vehicle has some requirements on a voltage plateau of the cell. In a fixed material system, to achieve a specific voltage plateau, a required volume of the cell is fixed. Therefore, if a length of the cell is increased, a thickness or width thereof is reduced. In addition, a surface area of the entire battery needs to be ensured to improve heat dissipation. Under the premise, the length of the cell cannot be increased by reducing the width (height) of the cell. Moreover, the space utilization for the height of the cell is limited on the vehicle body. To minimize the impact, the width (height) of the cell is generally not adjusted. Therefore, the surface area of the entire cell is changed by only changing the length of the cell along the first direction and the thickness thereof along the second direction. Therefore, to increase the length, reducing the thickness is very likely to be considered. Actually, because a cell core and related materials need to be added to an interior of the cell, a change in the thickness of the cell has a minimum limit value. Therefore, because the length of the cell is affected by the limit value of the thickness, a changing capacity of the length in the first direction is limited, and the length of the cell cannot be increased infinitely.

This application further discloses an energy storage device 2.

As shown in FIG. 27, the energy storage device 2 of this application includes the battery pack 200 according to any of the foregoing embodiments. The energy storage device 2 of this application may be used for a domestic backup power supply, a commercial backup power supply, an outdoor power supply, a peak-shaving energy storage device for a power station, power supplies for various vehicles, and the like.

The implementations of this application are described in detail above with reference to the accompanying drawings. However, this application is not limited to the specific details in the foregoing implementations. In the scope of the technical idea of this application, various simple variants can be made on the technical solution of this application, and the simple variants all belong to the protection scope of this application.

It should be further noted that the specific technical features described in the above specific implementations may be combined in any suitable manner without contradiction. To avoid unnecessary repetition, various possible combinations are not further described in this application.

In addition, the various implementations of this application may be combined without departing from the idea of this application, and such combinations shall also fall within the scope of this application.

Description is performed below through Comparative Example 1 and Embodiments 1 and 2, Comparative Example 2 and Embodiments 3 and 4, and Comparative Example 3 and Embodiment 5. According to the battery pack 200 of the embodiments of this application, energy density and the like are improved through design of arrangement, size parameters, and the like of the cells 100.

A lithium iron phosphate battery is used as an example in all of the following embodiments and comparative examples.

In Comparative Example 1, Embodiment 1, and Embodiment 2, a total volume of the battery pack 200 is 213 L, a comprehensive volume occupied by a battery pack housing, an internal battery management system and other power distribution modules thereof is 82.54 L, an actual remaining volume of the battery pack 200 capable of accommodating the cells 100 and/or a first separator and a second separator is 130.46 L, where a length of the battery pack housing is 1380 mm, a width thereof is 1005 mm, and a thickness thereof is 137 mm, a volume of a power distribution box is 22.5 L, and a total volume of the battery pack is 213 L=1380×1005×137×0.000001+22.5.

### Comparative Example 1

For a battery pack 200 in the related art, as shown in FIG. 1, two cross beams 500 and one longitudinal beam 600 are disposed in a battery pack housing. The two cross beams 500 and one longitudinal beam 600 divide cells 100 into six battery modules 400.

### Embodiment 1

According to a battery pack 200 of this embodiment of this application, as shown in FIG. 21, a length direction of a cell 100 is arranged along a width direction of the battery pack 200, a plurality of cells 100 are arranged along a length direction of the battery pack 200, and in the width direction of the battery pack 200, a battery pack housing accommodates one cell 100, and each of the plurality of cells 100 extends from one side of the battery pack housing to the other side thereof in the width direction of the battery pack 200. A first separator 700 is disposed in the battery pack housing, and no second separator 800 is disposed. The first separator 700 extends along a width direction of the battery pack 200, a plurality of cells 100 are arranged along a length direction of the battery pack 200 to form a cell array 3, and the first separator 700 divides the cell array 400 into two parts along the length direction of the battery pack 200. A first edge beam 201 and a second edge beam 202 of the battery pack housing located on two sides of the width direction of the battery pack 200 provide support forces for the cell 100, and a third edge beam 203 and a fourth edge beam 204 of the battery pack housing located on two ends of the length direction of the battery pack 200 provide inward pressing forces for an adjacent cell 100. A layer of cell array 400 is disposed in the battery pack housing along a height direction of the battery pack 200.

### Embodiment 2

According to a battery pack 200 of this embodiment of this application, as shown in FIG. 23, a length direction of a cell 100 is arranged along a width direction of the battery pack 200, a plurality of cells 100 are arranged along a length direction of the battery pack 200, and in the width direction of the battery pack 200, a battery pack housing accommodates one cell 100, and each of the plurality of cells 100 extends from one side of the battery pack housing to the other side thereof in the width direction of the battery pack 200. No first separator 700 or second separator 800 is disposed in the battery pack housing. A first edge beam 201 and a second edge beam 202 of the battery pack housing located on two sides of the width direction of the battery pack 200 provide support forces for the cell 100, and a third edge beam 203 and a fourth edge beam 204 of the battery pack housing located on two ends of the length direction of the battery pack 200 provide inward pressing forces for an adjacent cell 100. Two layers of cell arrays 400 are disposed in the battery pack housing along a height direction of the battery pack 200.

It may be learned by a person skilled in the art by comparing the foregoing Comparative Example 1 and Embodiments 1 to 3 that, compared with the battery pack 200 in the related art, according to the battery pack 200 of the embodiments of this application, a grouping rate may break through a limit of an existing battery pack 200 through design of arrangement, size parameters, and other factors of the cells 100, to achieve higher energy density.

In Comparative Example 2, Embodiment 3, and Embodiment 4, a total volume of the battery pack 200 is 310 L, a comprehensive volume occupied by a battery pack housing, an internal battery management system and other power distribution modules thereof is 90 L, an actual remaining volume of the battery pack capable of accommodating the cells 100 and/or a first separator and a second separator is 220 L, where a length of the battery pack housing is 1580 mm, a width thereof is 1380 mm, and a thickness thereof is 137 mm, a volume of a power distribution box is 11 L, and a total volume of the battery pack is 310 L=1580×1380×137×0.000001+11.

### Comparative Example 2

An arrangement manner of cells in the battery pack is the same as that in Comparative Example 1.

### Embodiment 3

According to a battery pack 200 of this embodiment of this application, as shown in FIG. 20, a length direction of a cell 100 is arranged along a length direction of the battery pack 200, a plurality of cells 100 are arranged along a width direction of the battery pack 200, and in the length direction of the battery pack 200, a battery pack housing accommodates one cell 100, and each of the plurality of cells 100 extends from one side of the battery pack housing to the other side thereof in the length direction of the battery pack 200. A second separator 800 is disposed in the battery pack housing, and no cross beam 500 is disposed. The second separator 800 extends along a length direction of the battery pack 200, a plurality of cells 100 are arranged along a width direction of the battery pack 200 to form a cell array 400, and the second separator 800 divides the cell array 400 into two parts along the width direction of the battery pack 200. A third edge beam 203 and a fourth edge beam 204 of the battery pack housing located at two ends of the length direction of the battery pack 200 provide support forces for the cell 100, and a first edge beam 201 and a second edge beam 202 of the battery pack housing located on two sides of the width direction of the battery pack 200 provide inward pressing forces for the cell 100. Two layers of cell arrays 400 are disposed in the battery pack housing along a height direction of the battery pack 200.

### Embodiment 4

According to a battery pack 200 of this embodiment of this application, as shown in FIG. 24, a length direction of a cell 100 is arranged along a length direction of the battery pack 200, a plurality of cells 100 are arranged along a width direction of the battery pack 200, and in the length direction of the battery pack 200, a battery pack housing accommodates one cell 100, and each of the plurality of cells 100 extends from one side of the battery pack housing to the other side thereof in the length direction of the battery pack 200. A third edge beam 203 and a fourth edge beam 204 of the battery pack housing located at two ends of the length direction of the battery pack 200 provide support forces for the cell 100, and a first edge beam 201 and a second edge beam 202 of the battery pack housing located on two sides of the width direction of the battery pack 200 provide inward pressing forces for the cell 100. Two layers of cell arrays 400 are disposed in the battery pack housing along a height direction of the battery pack 200.

In Comparative Example 3 and Embodiment 5, a total volume of the battery pack 200 is 414 L, a comprehensive volume occupied by a battery pack housing, an internal battery management system and other power distribution modules thereof is 102 L, an actual remaining volume of the battery pack capable of accommodating the cells 100 is 312 L, where a length of the battery pack housing is 2130 mm, a width thereof is 1380 mm, and a thickness thereof is 137 mm, a volume of a power distribution box is 11 L, and a total volume of the battery pack is 414 L=2130×1380×137×0.000001+11.

### Comparative Example 3

An arrangement manner of cells is the same as that in Comparative Example 1.

### Embodiment 5

An arrangement manner of cells in the battery pack is the same as that in Embodiment 4.

### Embodiment 6

In this embodiment, a total volume of the battery pack 200 is 508 L, a comprehensive volume occupied by a battery pack housing, an internal battery management system and other power distribution modules thereof is 119 L, an actual remaining volume of the battery pack capable of accommodating the cells 100 is 389 L, where a length of the battery pack housing is 2630 mm, a width thereof is 1380 mm, and a thickness thereof is 137 mm, a volume of a power distribution box is 11 L, and a total volume of the battery pack is 414 L=2630×1380×137×0.000001+11. An arrangement manner of cells in the battery pack is the same as that in Embodiment 4.

Specific parameters of Embodiments 1 to 6 and Comparative Examples 1 and 2 are shown in Table 1.

**Table 1**

| | Comparative Example 1 | Embodiment 1 | Embodiment 2 | Comparative Example 2 | Embodiment 3 | Embodiment 4 | Comparative Example 3 | Embodiment 5 | Embodiment 6 |
|---|---|---|---|---|---|---|---|---|---|
| Sizes of cell: length, width, and height (mm) | 208^{∗}118^{∗} 13.5 | 905^{∗}118^{∗} 13.5 | 905^{∗}118^{∗} 13.5 | 208^{∗}118^{∗} 13.5 | 1280^{∗}118^{∗} 13.5 | 1280^{∗}118^{∗} 13.5 | 208^{∗}118^{∗} 13.5 | 2000^{∗}118^{∗} 13.5 | 2500^{∗}118^{∗} 13.5 |
| Quantity | 352 | 88 | 92 | 500 | 90 | 93 | 752 | 94 | 94 |
| Capacity of cell (Ah) | 47.5 | 202 | 202 | 47.5 | 286 | 286 | 47.5 | 448 | 561 |
| Electric quantity of cell (Wh) | 152 | 646.4 | 646.4 | 152 | 915.2 | 915.2 | 152 | 1434 | 1795 |
| Volume of cell (L) | 0.331 | 1.442 | 1.442 | 0.331 | 2.039 | 2.039 | 0.331 | 3 | 4 |
| Energy density of cell (Wh/L) | 459 | 448 | 448 | 459 | 449 | 449 | 459 | 450 | 451 |
| Electric quantity of battery pack (Wh) | 53504 | 56883.2 | 59468.8 | 76000 | 82368 | 85113.6 | 114301 | 134758.4 | 168748.8 |
| Total volume of battery pack (L) | 213 | 213 | 213 | 310 | 310 | 310 | 414 | 414 | 508 |
| Energy density of battery pack (Wh/L) | 251 | 268 | 230 | 245 | 266 | 275 | 276 | 326 | 332 |
| Sum of volumes of cells/volume of battery pack | 54.76% | 59.70% | 62.41% | 53.49% | 59.25% | 61.23% | 60.23% | 72.39% | 73.66% |

Description is performed below through Comparative Example 4 Embodiments 7-11. According to the battery pack 200 of the embodiments of this application, a heat dissipation effect and the like are improved through design of size parameters and the like of the cell 100.

Fast charging is performed on cells in Comparative Example 4 and Embodiments 7 to 11 at a speed of 2C, and temperature rises of the cells are measured in the fast charging process. In Table 2 below, selection of parameters of a length, a width, a thickness, a volume, a surface area, and energy of the cell in the embodiments and comparative examples is recorded, and specific temperature rises are recorded.

**Table 2**

| | Comparative Example 4 | Embodiment 7 | Embodiment 8 | Embodiment 9 | Embodiment 10 | Embodiment 11 |
|---|---|---|---|---|---|---|
| Length of battery body (mm) | 173 | 905 | 1280 | 700 | 600 | 1500 |
| Width of battery body (mm) | 113.9 | 113.9 | 109 | 109 | 150 | 105 |
| Thickness of battery body (mm) | 50 | 9.6 | 7 | 12.5 | 14.5 | 13.5 |
| Volume of battery body (mm³) | 985235 | 989563.2 | 976640 | 953750 | 1305000 | 2126250 |
| surface area of battery body (mm²) | 58146.02 | 223535 | 296960 | 170100 | 197400 | 355500 |
| Length of battery body/width of battery body | 1.52 | 7.95 | 11.74 | 6.422018349 | 4 | 14.28571429 |
| Length of battery body/thickness of battery body | 3.46 | 94.2708333 | 182.8571429 | 56 | 41.37931034 | 111.1111111 |
| Length of battery body/volume of battery body (mm⁻²) | 0.000176 | 0.00091455 | 0.001310616 | 0.000733945 | 0.00045977 | 0.000705467 |
| Width of battery body/volume of battery body (mm⁻²) | 0.000116 | 0.0001151 | 0.000111607 | 0.000114286 | 0.000114943 | 0.000049383 |
| Thickness of battery body /volume of battery body (mm⁻²) | 0.000051 | 0.0000097 | 0.000007167 | 0.000013106 | 0.000011111 | 0.000006349 |
| Length of battery body/surface area of battery body (mm⁻¹) | 0.002975 | 0.00404858 | 0.004310345 | 0.004115226 | 0.003039514 | 0.004219409 |
| surface area of battery body/volume of battery body (mm⁻¹) | 0.059017 | 0.2258926 | 0.30406291 | 0.178348624 | 0.151264368 | 0.167195767 |
| Temperature rise of cell (°C) | 22.24 | 16.20 | 15.56 | 17.92 | 21.92 | 21.7 |
| Temperature rise of battery pack (°C) | 12.24 | 6.5 | 5.56 | 7.92 | 11.95 | 11.7 |

It can be learned from the data in the table that during fast charging under the same conditions, the cell 100 provided by this application, compared with the comparative examples, has temperature rises reduced to different degrees, has a better heat dissipation effect than that in the related art. When the cells 100 are assembled into a battery pack, a temperature rise of the battery pack is also reduced relative to the battery pack in the related art.

It may be learned by a person skilled in the art by comparing the foregoing comparative examples and the embodiments that according to the battery pack 200 of this embodiment of this application, the space utilization may break through a limit of an existing battery pack 200 through design of arrangement, size parameters, and other factors of the cells 100, to achieve higher energy density. In addition, the increase in energy density is magnified as an overall volume of the battery pack 200 is increased. In other words, for a battery pack 200 with a larger volume, energy density is more significantly improved by using the solutions of the embodiments of this application.

In the descriptions of this specification, descriptions using reference terms "an embodiment", "some embodiments", "an exemplary embodiment", "an example", "a specific example", or "some examples" mean that specific characteristics, structures, materials, or features described with reference to the embodiment or example are included in at least one embodiment or example of this application. In this specification, exemplary descriptions of the foregoing terms do not necessarily refer to the same embodiment or example. In addition, the described specific features, structures, materials, or characteristics may be combined in a proper manner in any one or more of the embodiments or examples.

Although the embodiments of this application have been shown and described, a person of ordinary skill in the art should understand that various changes, modifications, replacements and variations may be made to the embodiments without departing from the principles and spirit of this application, and the scope of this application is as defined by the appended claims and their equivalents.

## Claims

1. A battery pack, comprising a cell array and a support member, wherein
the cell array comprises a plurality of cells, each of the plurality of cells has a first size, and the first size is a maximum value of spacings between pairs of imaginary parallel planes that clamp the cell; at least one cell satisfies 600 mm≤first size≤2500 mm, and is supported by the support member; and
a normal direction of two parallel planes corresponding to the first size is a direction Q, a battery placement area is defined in the battery pack, the cell array is located in the battery placement area, and each of the plurality of cells extends from one side of the battery placement area to another side of the battery placement area along the direction Q.

2. The battery pack according to claim 1, wherein each of the plurality of cells has a second size, the second size is a minimum value of spacings between pairs of imaginary parallel planes that clamp the cell, a normal direction of two parallel planes corresponding to the second size is a direction P, and the plurality of cells are arranged along the direction P of the at least one cell.

3. The battery pack according to claim 2, wherein the at least one cell satisfies 10≤first size/second size≤208.

4. The battery pack according to claim 3, wherein the at least one cell satisfies 23≤first size/second size≤208.

5. The battery pack according to claim 4, wherein the at least one cell satisfies 50≤first size/second size≤70.

6. The battery pack according to claim 1, wherein the at least one cell satisfies 600 mm≤first size≤1500 mm.

7. The battery pack according to claim 6, wherein the at least one cell satisfies 600 mm≤first size≤1000 mm.

8. The battery pack according to claim 1, wherein each of the plurality of cells has a volume V, and the at least one cell satisfies 0.0005 mm⁻²≤first size/V≤0.002 mm⁻².

9. The battery pack according to claim 1, wherein each of the plurality of cells has a volume V and a surface area, and the at least one cell satisfies 0.1 mm⁻¹≤S/V≤0.35 mm⁻¹.

10. The battery pack according to claim 1, wherein the at least one cell comprises a casing, a cell core located inside the casing, and a reinforcing member configured to reinforce the casing, and the support member is coupled to the reinforcing member to support the at least one cell.

11. The battery pack according to claim 10, wherein the reinforcing member comprises a reinforcing shell, the reinforcing shell envelops the casing of the at least one cell, and the support member is coupled to the reinforcing shell to support the at least one cell.

12. The battery pack according to claim 10, wherein each of the plurality of cells comprises electrode terminals configured to lead out an internal current, the reinforcing member comprises a current converging member, the current converging member is configured to electrically connect electrode terminals of the plurality of cells, and the support member is coupled to the current converging member to support the at least one cell.

13. The battery pack according to claim 1, wherein the battery pack further comprises two side plate parts disposed opposite to each other on two sides of the cell array and configured to clamp the cell array.

14. The battery pack according to claim 1, wherein the battery pack comprises a vehicle-use tray, the vehicle-use tray comprises a first edge beam and a second edge beam disposed opposite to each other along the direction Q, the support member is the first edge beam and the second edge beam, and two ends of the at least one cell are respectively supported by the first edge beam and the second edge beam.

15. The battery pack according to claim 1, wherein the support member is a plurality of bottom beams, and the bottom beams are located below the cell array.

16. The battery pack according to claim 15, wherein the bottom beams comprise a first beam and a second beam located on the first beam and intersecting the first beam, an angle between an extending direction of the first beam and the direction Q ranges from 60 to 90 degrees, and the at least one cell is supported by the first beam.

17. The battery pack according to claim 15, wherein the bottom beams are a plurality of rectangular beams disposed in parallel and spaced apart from each other; and an angle between an extending direction of the rectangular beam and the direction Q ranges from 60 to 90 degrees, and the at least one cell is supported by the rectangular beam.

18. The battery pack according to claim 1, wherein the support member is a vehicle chassis, and the cell array is located on the vehicle chassis.

19. The battery pack according to claim 12, wherein the electrode terminals are disposed on two ends of each of the plurality of cells along the direction Q.

20. The battery pack according to claim 1, wherein the battery pack accommodates only one of the cells in the direction Q.

21. The battery pack according to claim 1, wherein each of the plurality of cells has a second size, the second size is a minimum value of spacings between pairs of imaginary parallel planes that clamp the cell, a normal direction of two parallel planes corresponding to the second size is a direction P, the battery pack comprises N cell arrays along the direction P, the cell arrays are electrically connected to each other by a connector between electrode terminals of the cells, and N is greater than 1.

22. The battery pack according to claim 1, wherein a plurality of battery placement areas are formed in the battery pack, the battery pack comprises M cell arrays distributed along the direction Q and located in the plurality of battery placement areas in a one-to-one correspondence, the cell arrays are electrically connected to each other by a connector between electrode terminals of the cells, and M is greater than 1.

23. A battery pack, comprising a cell array and a support member, wherein
the cell array comprises a plurality of cells, each of the plurality of cells has a size A, the size A is a length of a smallest rectangle enclosing the cell, and at least one cell satisfies 600 mm≤size A≤2500 mm, and is supported by the support member; and
a battery placement area is defined in the battery pack, the cell array is located in the battery placement area, and the at least one cell extends from one side of the battery placement area to another side of the battery placement area along a length direction of the smallest rectangle enclosing the cell.

24. The battery pack according to claim 23, wherein the plurality of cells are arranged along a direction K, and the direction K is a width direction of the smallest rectangle enclosing the at least one cell in the cell array.

25. The battery pack according to claim 24, wherein each of the plurality of cells has a size B, the size B is a width of the smallest rectangle enclosing the cell, and the at least one cell satisfies 10≤size A/size B≤208.

26. The battery pack according to claim 25, wherein the at least one cell satisfies 23≤size A/size B≤208.

27. The battery pack according to claim 26, wherein the at least one cell satisfies 50≤size A/size B≤70.

28. The battery pack according to claim 23, wherein the plurality of cells are arranged along a direction K, and the direction K is a height direction of the smallest rectangle enclosing the at least one cell in the cell array.

29. The battery pack according to claim 28, wherein each of the plurality of cells has a size C, the size C is a height of the smallest rectangle enclosing the cell, and the at least one cell satisfies 10≤size A/size C≤208.

30. The battery pack according to claim 29, wherein the at least one cell satisfies 23≤size A/size C≤208.

31. The battery pack according to claim 30, wherein the at least one cell satisfies 50≤size A/size C≤70.

32. The battery pack according to claim 23, wherein the at least one cell satisfies 600 mm≤size A≤1500 mm.

33. The battery pack according to claim 32, wherein the at least one cell satisfies 600 mm≤size A≤1000 mm.

34. The battery pack according to claim 23, wherein the at least one cell comprises a casing, a cell core located inside the casing, and a reinforcing member configured to reinforce the casing, and the support member is coupled to the reinforcing member to support the at least one cell.

35. The battery pack according to claim 34, wherein the reinforcing member comprises a reinforcing shell, the reinforcing shell envelops the casing of the at least one cell, and the support member is coupled to the reinforcing shell to support the at least one cell.

36. The battery pack according to claim 34, wherein each of the plurality of cells comprises electrode terminals configured to lead out an internal current, the reinforcing member comprises a current converging member, the current converging member is configured to electrically connect electrode terminals of the plurality of cells, and the support member is coupled to the current converging member to support the at least one cell.

37. The battery pack according to claim 23, wherein the battery pack further comprises two side plate parts disposed opposite to each other on two sides of the cell array and configured to clamp the cell array.

38. The battery pack according to claim 23, wherein the battery pack comprises a vehicle-use tray, the vehicle-use tray comprises a first edge beam and a second edge beam disposed opposite to each other along the length direction of the smallest rectangle enclosing the at least one cell, the support member is the first edge beam and the second edge beam, and two ends of the at least one cell are respectively supported by the first edge beam and the second edge beam.

39. The battery pack according to claim 23, wherein the support member is a plurality of bottom beams, and the bottom beams are located below the cell array.

40. The battery pack according to claim 39, wherein the bottom beams comprise a first beam and a second beam located on the first beam and intersecting the first beam, an angle between an extending direction of the first beam and the length direction of the smallest rectangle enclosing the at least one cell ranges from 60 to 90 degrees, and the at least one cell is supported by the first beam.

41. The battery pack according to claim 39, wherein the bottom beams are a plurality of rectangular beams disposed in parallel and spaced apart from each other; and an angle between an extending direction of the rectangular beam and the length direction of the smallest rectangle enclosing the at least one cell ranges from 60 to 90 degrees, and the at least one cell is supported by the rectangular beam.

42. The battery pack according to claim 23, wherein the support member is a vehicle chassis, and the cell array is located on the vehicle chassis.

43. The battery pack according to claim 36, wherein the electrode terminals are disposed on two ends of each of the plurality of cells along a direction of the size A.

44. The battery pack according to claim 43, wherein the battery pack accommodates only one of the cells in the length direction of the smallest rectangle enclosing the cell.

45. The battery pack according to claim 23, wherein a battery placement area is defined in the battery pack, the cell array is located in the battery placement area, the battery pack comprises N cell arrays along a width direction of the smallest rectangle enclosing the at least one cell, the cell arrays are electrically connected to each other by a connector between electrode terminals of the cells, and N is greater than 1.

46. The battery pack according to claim 23, wherein a plurality of battery placement areas are formed in the battery pack, the battery pack comprises M cell arrays distributed along the length direction of the smallest rectangle enclosing the cell and located in the plurality of battery placement areas in a one-to-one correspondence, the cell arrays are electrically connected to each other by a connector between electrode terminals of the cells, and M is greater than 1.

47. The battery pack according to claim 23, wherein a battery placement area is defined in the battery pack, the cell array is located in the battery placement area, the battery pack comprises J cell arrays along a height direction of the smallest rectangle enclosing the at least one cell, the cell arrays are electrically connected to each other by a connector between electrode terminals of the cells, and J is greater than 1.

48. A battery pack, comprising a cell array and a support member, wherein
the cell array comprises a plurality of cells, and at least one cell satisfies that: a battery body and electrode terminals extending from the battery body and configured to lead out an external current from the battery body are comprised, the battery body is a rough cuboid, a length of the battery body is L, and 600 mm≤L≤2500 mm, and the at least one cell is supported by the support member; and
a battery placement area is defined in the battery pack, the cell array is located in the battery placement area, and each of the plurality of cells extends from one side of the battery placement area to another side of the battery placement area along a direction of L.

49. The battery pack according to claim 48, wherein the at least one cell comprises a casing, a cell core located inside the casing, and a reinforcing member configured to reinforce the casing, and the support member is coupled to the reinforcing member to support the at least one cell.

50. The battery pack according to claim 49, wherein the reinforcing member comprises a reinforcing shell, the reinforcing shell envelops the casing of the at least one cell, and the support member is coupled to the reinforcing shell to support the at least one cell.

51. The battery pack according to claim 49, wherein each of the plurality of cells comprises electrode terminals configured to lead out an internal current, the reinforcing member comprises a current converging member, the current converging member is configured to electrically connect electrode terminals of the plurality of cells, and the support member is coupled to the current converging member to support the at least one.

52. The battery pack according to claim 48, wherein a thickness of the battery body is D, a height is H, a thickness direction is a direction X, a length direction is a direction Y, and a height direction is a direction Z.

53. The battery pack according to claim 52, wherein the plurality of cells are arranged along the direction X of the at least one cell in the cell array.

54. The battery pack according to claim 53, wherein the at least one cell satisfies 10≤L/D≤208.

55. The battery pack according to claim 54, wherein the at least one cell satisfies 23≤L/D≤208.

56. The battery pack according to claim 55, wherein the at least one cell satisfies 50≤L/D≤70.

57. The battery pack according to claim 52, wherein the plurality of cells are arranged along the direction Z of the at least one cell in the cell array.

58. The battery pack according to claim 57, wherein the at least one cell satisfies 10≤L/H≤208.

59. The battery pack according to claim 58, wherein the at least one cell satisfies 23≤L/H≤208.

60. The battery pack according to claim 59, wherein the at least one cell satisfies 50≤L/H≤70.

61. The battery pack according to claim 48, wherein a volume of each of the plurality of cells is V, and the at least one cell satisfies 0.0005 mm⁻²≤L/V≤0.002 mm⁻².

62. The battery pack according to claim 48, wherein the at least one cell satisfies 600 mm≤L≤1 500 mm.

63. The battery pack according to claim 62, wherein the at least one cell satisfies 600 mm≤L≤1 000 mm.

64. The battery pack according to claim 62, wherein a thickness of the battery body is D, a height is H, a thickness direction is a direction X, a length direction is a direction Y, and a height direction is a direction Z; the height H of the battery body is greater than the thickness D of the battery body, the at least one cell satisfies 23≤L/D≤208 and 4≤L/H≤21, and the plurality of cells are arranged along the direction X of at least one cell in the cell array.

65. The battery pack according to claim 64, wherein the at least one cell satisfies 9≤L/H≤13.

66. The battery pack according to claim 62, wherein a volume of the battery body is V, and a surface area is S, wherein a relationship between the surface area and the volume V is 0.1 mm⁻¹≤S/V≤0.35 mm⁻¹.

67. The battery pack according to claim 64, wherein the battery pack further comprises two side plate parts disposed opposite to each other on two sides of the cell array along the direction X and configured to clamp the cell array.

68. The battery pack according to claim 64, wherein the battery pack comprises a vehicle-use tray, the vehicle-use tray comprises a first edge beam and a second edge beam disposed opposite to each other along the direction Y, the support member is the first edge beam and the second edge beam, and two ends of the at least one cell are respectively supported by the first edge beam and the second edge beam.

69. The battery pack according to claim 68, wherein the first edge beam and the second edge beam each comprises an inner wall surface matching two end surfaces of the cell, and insulation plates are respectively sandwiched between the inner wall surfaces of the first edge beam and the second edge beam and the end surfaces of the cell.

70. The battery pack according to claim 68, wherein the tray comprises a bottom plate, the first edge beam and the second edge beam are respectively disposed on two ends of the bottom plate, and each of the plurality of cells and the bottom plate are spaced apart from each other.

71. The battery pack according to claim 70, wherein a heat preservation layer is disposed between each of the plurality of cells and the bottom plate.

72. The battery pack according to claim 70, wherein the battery pack further comprises a sealing cover, and the sealing cover and the tray form an accommodating cavity for accommodating the cell array.

73. The battery pack according to claim 72, wherein the first edge beam further comprises a first support plate protruding from an inner wall surface of the first edge beam toward the cell, the first support plate comprises a first support surface on a surface of the first support plate facing toward the sealing cover, and the first support plate comprises a first mounting surface on a surface of the first support plate facing away from the sealing cover;
the second edge beam comprises a second support plate protruding from an inner wall surface of the second edge beam toward the cell, the second support plate comprises a second support surface on a surface of the second support plate facing toward the sealing cover, and the sealing cover comprises a second mounting surface on a surface of the second support plate facing away from the sealing cover; and
the first support surface and the second support surface are configured to support the at least one cell, and the first mounting surface and the second mounting surface are configured to mount the bottom plate.

74. The battery pack according to claim 73, wherein the first edge beam comprises a first connection surface on the inner wall surface of the first edge beam facing toward the cell, and a distance from the first connection surface to the sealing cover is less than a distance from the first support surface to the sealing cover; the second edge beam comprises a second connection surface on the inner wall surface of the second edge beam facing toward the cell, and a distance from the second connection surface to the sealing cover is less than a distance from the second support surface to the sealing cover; and two ends of each of the plurality of cells are respectively in contact with the first connection surface and the second connection surface.

75. The battery pack according to claim 74, wherein the first edge beam comprises a structure comprising at least two steps on the inner wall surface of the first edge beam facing toward the cell, wherein surfaces of the two steps facing toward the sealing cover respectively form the first connection surface and the first support surface; and
the second edge beam comprises a structure comprising at least two steps on the inner wall surface of the second edge beam facing toward the cell, wherein surfaces of the two steps facing toward the sealing cover respectively form the second connection surface and the second support surface.

76. The battery pack according to claim 74, further comprising a first end plate and a second end plate, wherein the first end plate is disposed between a first end of at least one of the cells and the first edge beam, and the second end plate is disposed between a second end of the at least one of the cells and the second edge beam; and the first end of the at least one of the cells is connected to the first connection surface by the first end plate, and the second end of the at least one of the cells is connected to the second connection surface by the second end plate.

77. The battery pack according to claim 76, wherein the first end plate comprises an end plate body disposed opposite to the end surface of each of the plurality of cells and a first connection plate connected to the end plate body and protruding toward the first edge beam, the second end plate comprises an end plate body disposed opposite to the end surface of each of the plurality of cells and a first connection plate connected to the end plate body and protruding toward the second edge beam, and the first connection plates are connected to the first connection surface and the second connection surface.

78. The battery pack according to any one of claims 68 to 77, wherein an anti-explosion valve is disposed on the first end of the at least one of the cells, an exhaust passage is provided inside the first edge beam, the first edge beam is provided with an exhaust hole at a position corresponding to the anti-explosion valve, and the exhaust hole is in communication with the exhaust passage; an anti-explosion valve is disposed on the second end of the cell, an exhaust passage is provided inside the second edge beam, the second edge beam is provided with an exhaust hole at a position corresponding to the anti-explosion valve, and the exhaust hole is in communication with the exhaust passage; and the battery pack is provided with an exhaust opening in communication with the exhaust passage.

79. The battery pack according to claim 72, wherein the tray further comprises a third edge beam and a fourth edge beam disposed opposite to each other along the direction X, and the third edge beam and the fourth edge beam are configured to provide pressing forces for the cell array.

80. The battery pack according to claim 77, wherein a management accommodating cavity for accommodating a battery management component and a power distribution component is defined among the first connection surface, the second connection surface, the cell, and the sealing cover.

81. The battery pack according to claim 79, wherein the battery pack further comprises: a first elastic buffer device and/or a second elastic device, the first elastic buffer device is elastically sandwiched between the third edge beam and the cell adjacent to the third edge beam, and/or the second elastic device is elastically sandwiched between the fourth edge beam and the cell adjacent to the fourth edge beam.

82. The battery pack according to claim 79, further comprising a first side plate and/or a second side plate, wherein the first side plate is disposed between the third edge beam and the cell adjacent to the third edge beam; and the second side plate is disposed between the fourth edge beam and the cell adjacent to the fourth edge beam.

83. The battery pack according to claim 82, wherein the first side plate comprises a side plate body disposed opposite to a side surface of the cell and a second connection plate connected to the side plate body and protruding toward the third edge beam, the second side plate comprises a side plate body disposed opposite to a side surface of the cell and a second connection plate connected to the side plate body and protruding toward the fourth edge beam;
the third edge beam comprises a third connection surface facing toward the sealing cover, and the fourth edge beam comprises a fourth connection surface facing toward the sealing cover; and
the first side plate is connected to the third connection surface by the corresponding second connection plate, and the second side plate is connected to the fourth connection surface by the corresponding second connection plate.

84. The battery pack according to claim 79, further comprising:
a first panel and a second panel, respectively connected to upper surfaces and lower surfaces of at least some of the cells;
a first end plate and a second end plate, respectively disposed on two end surfaces of at least some of the cells; and
a first side plate and a second side plate, respectively disposed on outer sides of the outermost two of the cells, wherein
the first end plate, the second end plate, the first side plate, and the second side plate are all connected to the first panel and the second panel;
the first edge beam comprises a first support surface and a first connection surface on an inner wall surface of the first edge beam facing toward the cell; and the second edge beam comprises a second support surface and a second connection surface on an inner wall surface of the second edge beam facing toward the cell, a first end of the at least one cell is supported by the first support surface, a second end of the at least one cell is supported by the second support surface, the first end plate is connected to the first connection surface, and the second end plate is connected to the second connection surface; and
the third edge beam comprises a third connection surface on an inner wall surface of the third edge beam facing toward the cell, and the fourth edge beam comprises a fourth connection surface an inner wall surface of the fourth edge beam facing toward the cell; and the first side plate is connected to the third connection surface, and the second side plate is connected to the fourth connection surface.

85. The battery pack according to any one of claims 52 to 66, wherein the support member is a plurality of bottom beams, and the bottom beams are located below the cell array.

86. The battery pack according to claim 85, wherein the bottom beams comprise a first beam and a second beam located on the first beam and intersecting the first beam, an angle between an extending direction of the first beam and the direction Y ranges from 60 to 90 degrees, and the at least one cell is supported by the first beam.

87. The battery pack according to claim 86, wherein there are two second beams, the two second beams are respectively located on two ends of the first beam and are separately perpendicular to the first beam, and the at least one cell is supported by the first beam.

88. The battery pack according to claim 87, wherein a center of each of the plurality of cells is located on the first beam.

89. The battery pack according to claim 85, wherein the bottom beams are a plurality of rectangular beams disposed in parallel and spaced apart from each other; and an angle between an extending direction of the rectangular beam and the direction Y ranges from 60 to 90 degrees, and the at least one cell is supported by the rectangular beam.

90. The battery pack according to claim 89, wherein the rectangular beams are evenly distributed along the direction Y, the extending direction of the rectangular beam is perpendicular to the direction Y, and the at least one cell is located on the rectangular beam.

91. The battery pack according to any one of claims 48 to 66, wherein the support member is a vehicle chassis, and the cell array is located on the vehicle chassis.

92. The battery pack according to any one of claims 52 to 77, 79 to 84, or 86 to 90, wherein a battery placement area is defined in the battery pack, the cell array is located in the battery placement area, the battery pack comprises one cell array, and each of the plurality of cells extends from one side of the battery placement area to another side of the battery placement area along the direction Y

93. The battery pack according to claim 92, wherein the battery pack accommodates only one of the cells in the direction Y

94. The battery pack according to claim 92, wherein the cells are arranged from an end of the battery placement area to the other end of the battery placement area along the direction X.

95. The battery pack according to any one of claims 48 to 77, 79 to 84, or 86 to 90, wherein a battery placement area is defined in the battery pack, the cell array is located in the battery placement area, the battery pack comprises N cell arrays along the direction X, the cell arrays are electrically connected to each other by a connector between electrode terminals of the cells, and N is greater than 1.

96. The battery pack according to claim 95, wherein an electrode terminal of the last cell of the (N―1)^{th} cell array is connected to an electrode terminal of the first cell of the N^{th} cell array by the connector.

97. The battery pack according to any one of claims 52 to 77, 79 to 84, or 86 to 90, wherein a plurality of battery placement areas are formed in the battery pack, the battery pack comprises M cell arrays distributed along the direction Y and located in the plurality of battery placement areas in a one-to-one correspondence, the cell arrays are electrically connected to each other by a connector between electrode terminals of the cells, and M is greater than 1.

98. The battery pack according to claim 97, wherein an electrode terminal of the last cell of the (M―1)^{th} cell array is connected to an electrode terminal of the first cell of the M^{th} cell array by the connector.

99. The battery pack according to any one of claims 52 to 77, 79 to 84, or 86 to 90, wherein a plurality of battery placement areas are formed in the battery pack, the battery pack comprises N cell arrays distributed along the direction X and M cell arrays distributed along the direction Y, the cell arrays are located in the plurality of battery placement areas in a one-to-one correspondence, the cell arrays are electrically connected to each other by a connector between electrode terminals of the cells, N is greater than 1, and M is greater than 1.

100. The battery pack according to any one of claims 48 to 77, 79 to 84, or 86 to 90, wherein a battery placement area is defined in the battery pack, the cell array is located in the battery placement area, the battery pack comprises J cell arrays along the direction Z, the cell arrays are electrically connected to each other by a connector between electrode terminals of the cells, and J is greater than 1.

101. The battery pack according to claim 48, wherein a quantity of cells in the cell array ranges from 60 to 200.

102. The battery pack according to claim 101, wherein a quantity of cells in the cell array ranges from 80 to 150.

103. The battery pack according to claim 48, wherein at least some of the cells in the cell array are bonded by an adhesive.

104. The battery pack according to claim 48, further comprising: a heat exchange plate, wherein the heat exchange plate is mounted on an upper surface of the cell array.

105. The battery pack according to claim 52, wherein a volume of the battery body is V, and a relationship between a height H of the battery body and the volume V of the battery body is 0.0001 mm⁻²≤H/V≤0.00015 mm⁻².

106. A vehicle, comprising the battery pack according to any one of claims 1 to 105.

107. The vehicle according to claim 106, wherein the battery pack is disposed at a bottom of the vehicle, and the support member is fixedly connected to a chassis of the vehicle.

108. The vehicle according to claim 106 or 107, wherein the vehicle comprises a battery pack disposed at the bottom of the vehicle, the direction Q, or along the length direction of the smallest rectangle enclosing the cell, or along the direction Y is arranged along a width direction of a vehicle body of the vehicle, and the direction P, or the width direction of the smallest rectangle enclosing the cell, or the direction X is arranged along a length direction of the vehicle body of the vehicle.

109. The vehicle according to claim 108, wherein a width L3 of the battery pack in the direction Q, or along the length direction of the smallest rectangle enclosing the cell, or along the direction Y and a width W of the vehicle body satisfy 50%≤L3/W≤80%.

110. The vehicle according to claim 108, wherein a size L' of each of the plurality of cells along the direction Q, or along the length direction of the smallest rectangle enclosing the cell, or along the direction Y and a width W of the vehicle body satisfy 46%≤L'/W≤76%.

111. The vehicle according to claim 107, wherein the width W of the vehicle body ranges from 600 mm to 2000 mm.

112. An energy storage device, comprising the battery pack according to any one of claims 1 to 105.
